(19) Europäisches Patentamt / European Patent Office / Office européen des brevets

(11) **EP 1 253 707 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
***H02P 6/06*** (2006.01)   ***F24F 11/00*** (2006.01)

(21) Anmeldenummer: **02015389.6**

(22) Anmeldetag: **21.07.1999**

(54) **Verfahren zum Betrieb eines elektronisch kommutierten Motors, und Motor zur Durchführung eines solchen Verfahrens**

Method for controling an electronically commutated motor and a motor for performing such a method

Procédé de contrôle d'un moteur commuté électroniquement et moteur pour réaliser un tel procédé

(84) Benannte Vertragsstaaten:
**AT BE CH CY DE DK ES FI FR GB GR IE IT LI LU MC NL PT SE**

(30) Priorität: **14.08.1998 DE 19836882**

(43) Veröffentlichungstag der Anmeldung:
**30.10.2002 Patentblatt 2002/44**

(62) Dokumentnummer(n) der früheren Anmeldung(en) nach Art. 76 EPÜ:
**99942794.1 / 1 105 960**

(73) Patentinhaber: **ebm-papst St. Georgen GmbH & Co. KG**
**78112 St. Georgen (DE)**

(72) Erfinder:
• **Dufner, Thomas**
**78136 Schonach (DE)**
• **Hornberger, Jörg**
**72280 Dornstetten-Aach (DE)**
• **Kaltenbrunner, Hansjörg**
**78199 Bräunlingen (DE)**
• **Jeske Frank**
**78112 St. Georgen (DE)**
• **Karwath Arno**
**78652 Deisslingen (DE)**
• **Rappenecker Hermann**
**78147 Vöhrenbach (DE)**

(74) Vertreter: **Raible, Hans et al**
**Schoderstrasse 10**
**70192 Stuttgart (DE)**

(56) Entgegenhaltungen:
**WO-A-97/15111     US-A- 4 743 815**
**US-A- 5 206 572**

• **A. K. KOCHAAR, N. D. BURNS: "MICROPROCESSORS AND THEIR MANUFACTURING APPLICATIONS" 1983 , E. ARNOLD , LONDON XP002133262 * Seite 129 - Seite 131 ***

EP 1 253 707 B1

**EP 1 253 707 B1**

**Beschreibung**

Die Erfindung betrifft ein Verfahren zum Betrieb eines elektronisch kommutierten Motors, und einen Motor zur Durchführung eines solchen Verfahrens.

Aus der US-A-4743815 kennt man ein Verfahren zum Betrieb eines elektronisch kommutierten Motors. Dieser arbeitet beim Start im open loop und nach dem Anlauf im closed loop, also mit Steuerung der Kommutierung durch die induzierte Spannung. Hierfür werden zum einen Interrupt-Routinen verwendet, und zum anderen eine Routine, die pro Sekunde 120 mal durchlaufen und in regelmäßigen Abständen ausgeführt wird. Die Interrupt-Routinen erfordern bei diesem Motor drei Interruptebenen. Da mehrere Interrupts etwa gleichzeitig auftreten können, muss festgelegt sein, welche Interruptroutine in einem solchen Fall als erste ausgeführt wird und ggf. die anderen Interrupt-Routinen unterbricht. Dies begrenzt die Zahl solcher Routinen, besonders bei einem Elektromotor, der meist sehr preiswert sein muss, was die Verwendung von sehr teuren Mikroprozessoren oder Mikrocontrollern ausschließt.

Ferner kennt man aus der WO 97/15111A einen elektronisch kommutierten Motor und ein Verfahren zum Betrieb eines solchen Motors. Diesem Motor ist ein Mikrocontroller vom Typ PIC16C71 zugeordnet, und diesem ist ein Programm zugeordnet. Dieses Programm dient zur Steuerung einer Mehrzahl von Motorfunktionen unterschiedlicher Priorität und in ihm ist eine Mehrzahl von für den Betrieb des Motors erforderlichen, anforderbaren Routinen vorgesehen, welche nicht Interrupt-Routinen sind. Alle diese Routinen werden nacheinander ausgeführt, auch wenn sie innerhalb eines vorgegebenen Zeitraums im Augenblick nicht notwendig sind.

Es ist deshalb eine Aufgabe der Erfindung, ein neues Verfahren zum Betrieb eines elektronisch kommutierten Motors, und einen Motor zur Durchführung eines solchen Verfahrens, bereit zu stellen.

Nach der Erfindung wird diese Aufgabe gelöst durch ein Verfahren zum Betrieb eines elektronisch kommutierten Motors, welchem ein Mikroprozessor oder Mikrocontroller und ein diesem zugeordnetes Programm zugeordnet sind, welches Programm zur Steuerung einer Mehrzahl von Motorfunktionen unterschiedlicher Priorität dient, mit folgenden Schritten:

a) Es wird eine Mehrzahl von für den Betrieb des Motors erforderlichen, anforderbaren Routinen vorgesehen, welche nicht Interrupt-Routinen sind;
b) wenn eine dieser anforderbaren Routinen benötigt wird, wird ein entsprechendes Anforderungssignal für sie gesetzt;
c) durch eine übergeordnete Programmfunktion wird geprüft, welche der angeforderten Routinen die höchste Priorität hat, und diese Routine höchster Priorität wird als erste ausgeführt;
d) nach Ausführung dieser Routine höchster Priorität wird das dieser Routine zugeordnete Anforderungssignal rückgesetzt.

Ein solches Verfahren nützt die vorhandene Rechenkapazität eines Mikroprozessors oder Mikrocontrollers sehr gut aus und ermöglicht es, bestimmte zeitkritische Abfragen oder dergleichen in Abständen zu wiederholen, die eine vorgegebene Zeitdauer nicht überschreiten. Das können z.B. Abfragen eines Datenbusses sein, über welchen dem Motor Daten oder Befehle zuführbar sind.

Die Erfindung verwendet also, ggf. zusätzlich zu Interrupt-Routinen, eine Mehrzahl von anforderbaren Routinen, die nicht Interrupt-Routinen sind, sich also gegenseitig nicht unterbrechen können. Soll eine dieser anforderbaren Routinen angefordert werden, so wird ein Anfordersignal für sie gesetzt, und falls mehrere solche Routinen im gleichen Zeitraum angefordert werden, wird geprüft, welche der angeforderten Routinen die höchste Priorität hat. Diese wird dann, gewöhnlich nach einer kleinen zeitlichen Verzögerung, ausgeführt, und anschließend wird - nach ihrer Ausführung - ihr Anforderungssignal zurückgesetzt. Im Gegensatz zu Interrupt-Routinen mit ihrem großen Overhead innerhalb eines Prozessors handelt es sich hier um normale Routinen, die ausgeführt werden, wenn man sie braucht und wenn Zeit zu ihrer Abarbeitung vorhanden ist.

Die Erfindung gestattet die Verwendung preiswerter Mikrocontroller oder Mikroprozessoren, ohne die man preiswerte Motoren nicht bauen könnte. Dabei wird der Umstand ausgenützt, dass bei einem Elektromotor die meisten Berechnungen nicht zeitkritisch sind, weil der Mikrocontroller viel schneller rechnet als sich der Motor dreht. Durch die Erfindung kann man die Rechenzeit eines Mikroprozessors oder Mikrocontrollers optimal und sehr flexibel für verschiedene Rechenprozesse ausnutzen, wie sie beim Betrieb eines Motors im jeweiligen Augenblick benötigt werden: Wenn der Mikroprozessor oder Mikrocontroller gerade nicht mit Wichtigerem beschäftigt ist, wird eine Berechnung eingeschoben, die angefordert wurde. Wenn der Mikroprozessor oder Mikrocontroller mit Wichtigerem beschäftigt ist, muss diese Berechnung ein paar Mikrosekunden warten.

Dabei wird gemäß Anspruch 2 dieses Verfahren bevorzugt nach Art einer Schleife im Betrieb des Motors ständig wiederholt, wobei sich je nach Art der angeforderten Routine unterschiedliche Abläufe innerhalb der Schleife ergeben. Besonders vorteilhaft ist es hierbei, wenn gemäß Anspruch 3 eine im Programm auszuführende anforderbare Routine während ihrer Ausführung ihrerseits ein Anforderungssignal für eine andere auszuführende anforderbare Routine erzeugen kann. Dies ermöglicht eine enge Verkettung von Routinen, zwischen denen jeweils zeitkritische Programmschritte ablaufen können, z.B. für eine Datenübertragung.

Als besonders vorteilhaft hat sich eine Weiterbildung der Erfindung gemäß Anspruch 5 erwiesen. Hierbei fragt die übergeordnete Programmfunktion nach Abarbeitung einer anforderbaren Routine jeweils eine am Motor vorgesehene Verbindung zu einem Datenbus ab. Dies ermöglicht es, mit demselben Mikroprozessor nicht nur einen elektronisch kommutierten Motor zu steuern oder zu regeln, sondern auch noch die Datenübertragung von oder zu diesem Motor über einen Datenbus zu steuern.

Hierbei wird gemäß Anspruch 6 die maximale Zeitdauer der anforderbaren Routinen entsprechend der gewünschten Baudzahl der Datenübertragung festgelegt, d.h. je höher diese Baudzahl ist, umso kürzer müssen die anforderbaren Routinen sein. Ggf. muss man also eine zu lange Routine in eine Mehrzahl von kürzeren anforderbaren Routinen aufteilen und diese bei der Ausführung verketten, wie im Anspruch 3 angegeben.

Als sehr vorteilhaft für einen ruhigen Lauf des Motors hat sich die Weiterbildung gemäß Anspruch 7 erwiesen, bei welcher die Kommutierung des Motors jeweils während eines Interrupts erfolgt, der den augenblicklichen Programmablauf unterbricht. Eine solcher Interrupt ermöglicht eine präzise Kommutierung an solchen Drehstellungen des Motors, an denen nur eine geringe Geräuschentwicklung zu erwarten ist.

Eine andere Lösung der gestellten Aufgabe ist Gegenstand des Patentanspruchs 11.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den übrigen Unteransprüchen. Es zeigt:

Fig. 1          ein Prinzipschaltbild einer erfindungsgemäßen Anordnung,

Fig. 2          eine beispielhafte Darstellung einer Ausführungsform der Erfindung,

Fig. 3          die Pinbelegung des µC COP 842 CJ,

Fig. 4          ein Schaltbild, welches die Bauteile für die A/D-Wandlung und die Verarbeitung des Hallsignals zeigt,

Fig. 5          ein Flußdiagramm der A/D-Wandlung,

Fig. 6          den Aufbau eines für die A/D-Wandlung verwendeten Zählers,

Fig. 7          ein Zeitdiagramm zum Ablauf der A/D-Wandlung,

Fig. 8          eine Kennlinie mit Hysterese,

Fig. 9          ein Flußdiagramm für eine Hysteresefunktion,

Fig. 10         ein Flußdiagramm für eine Sensorabrißfunktion

Fig. 11         eine Beispieldefinition für eine Kennlinie mit vier Definitionspunkten,

Fig. 12         eine Tabelle der Definitionspunkte der Kennlinie aus Fig. 11,

Fig. 13         ein Flußdiagramm für die Berechnung der Solldrehzahl aus der Kennliniendefinition,

Fig. 14         ein Kennlinie mit einem für eine bestimmte Temperatur interpolierten Punkt,

Fig. 15         ein Flußdiagramm mit einer Variante der Berechnung der Solldrehzahl aus der Kennliniendefinition,

Fig. 16         eine Darstellung eines Hallsignals und zugeordneter Motorsignale,

Fig. 17         ein Flußdiagramm der Hall-Interruptroutine,

Fig. 18         ein Schaltbild mit für die Ansteuerung eines EEPROMS und den Zugang über einen Bus wichtigen Teilen,

Fig. 19         ein Schaltbild mit für die Regelung und den Antrieb des Elektromotors wichtigen Teilen,

| Fig. 20 | ein Flußdiagramm für den prinzipiellen Ablauf der Regelung der Drehzahl, |
|---|---|
| Fig. 21 | ein Flußdiagramm der Berechnung des Stellwertes und des Vorzeichens für die Regelung aus Fig. 20, |
| Fig. 22A bis 22D | eine Darstellung der Regelung für einen Motor mit der richtigen Drehzahl, |
| Fig. 23A bis 23E | eine Darstellung der Regelung für einen Motor mit zu niedriger Drehzahl, |
| Fig. 24A bis 24E | eine Darstellung der Regelung für einen Motor mit zu hoher Drehzahl, |
| Fig. 25 | einen Gesamtablauf der Regelung, |
| Fig. 26 | die Darstellung einer bevorzugten Ausführungsform eines Funktionsmanagers, |
| Fig. 27 | ein in dem Funktionsmanager verwendetes Funktionsregister, |
| Fig. 28 | eine für den Funktionsmanager modifizierte A/D-Wandlungsroutine, und |
| Fig. 29 | eine für den Funktionsmanager modifizierte Regelungsroutine. |

**Übersicht Kennlinienfunktion**

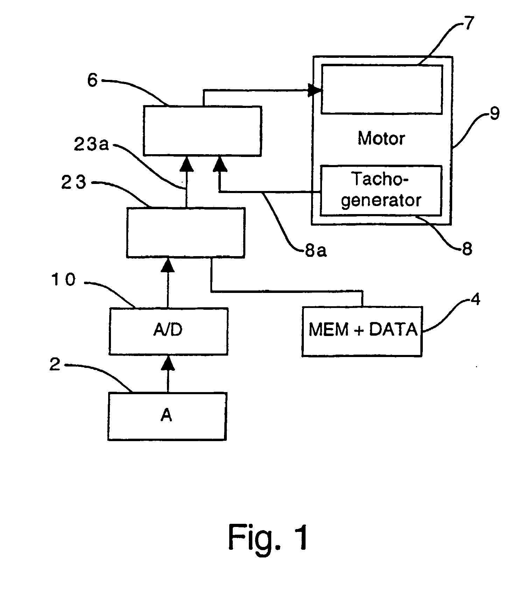

**Fig. 1** zeigt eine Prinzipdarstellung einer erfindungsgemäßen Anordnung. Ein Treiber 7 eines Motors 9 wird durch einen Drehzahlregler 6 gesteuert. Der Regler 6 erhält einen Istwert 8a der Drehzahl des Motors 9 von einem Tachogenerator 8, einen Sollwert 23a erhält er von einer Kennlinienfunktion 23. Die Kennlinienfunktion 23 berechnet, ausgehend von einer durch einen A/D-Wandler 10 digital gewandelten, ursprünglich analogen Größe A 2, den Sollwert 23a für den Drehzahlregler 6 mit Hilfe von in einem Speicher 4 gespeicherten Stützwerten einer Kennlinie "MEM + DATA", wobei die nicht durch die Stützwerte vorgegebenen Werte durch Interpolation berechnet werden.

**Übersicht Elektromotor**

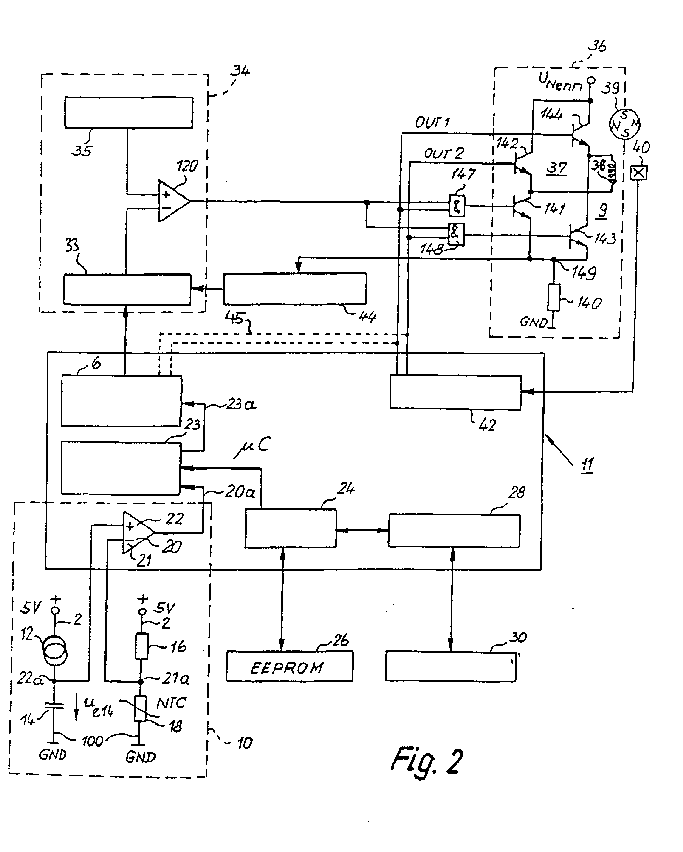

**Fig. 2** zeigt eine Übersicht über ein bevorzugtes Ausführungsbeispiel eines erfindungsgemäßen Elektromotors. Dieser wird gesteuert von einem Mikrocontroller ($\mu$C) 11. Der Analog-Digital-Wandler (A/D-Wandler) 10 ist unter Verwendung eines im $\mu$C 11 befindlichen Komparators 20 aufgebaut und ermöglicht eine Digitalisierung der über einen NTC-Widerstand 18 detektierten Temperatur. Der Komparator 20 hat einen Minuseingang 21, der im folgenden auch als CP- oder CMPIN- bezeichnet wird, und er hat einen Pluseingang 22, der im folgenden auch als CP+ oder CMPIN+ bezeichnet wird. Diese Eingänge können durch das Programm des $\mu$C 11 gesteuert werden, wie das nachfolgend beschrieben wird.

Ein konstanter Widerstand 16 ist in Reihe mit dem NTC-Widerstand 18 zwischen einer positiven Leitung 2 und Masse (GND) 100 angeschlossen. Ihr Verbindungspunkt 21a ist mit dem Minuseingang 21 verbunden.

Ebenso ist eine Konstantstromquelle 12 in Reihe mit einem Kondensator 14 zwischen der positiven Leitung 2 und Masse 100 angeschlossen, und ihr Verbindungspunkt 22a ist mit dem Pluseingang 22 des Komparators 20 verbunden.

Das Potential am Minuseingang 21 wird bestimmt durch die Temperatur am NTC-Widerstand 18, dessen Widerstandswert mit steigender Temperatur abnimmt, so daß dieses Potential mit steigender Temperatur sinkt.

Das Potential am Pluseingang 22 wird bestimmt durch die Spannung $u_{C14}$ am Kondensator 14. Wenn der Pluseingang 22 programmgesteuert mit Masse 100 verbunden wird, wird $u_{C14} = 0$, und wenn anschließend der Pluseingang 22 auf einen hochohmigen Zustand ("Tristate") umgeschaltet wird, wird der Kondensator 14 über die Konstantstromquelle 12 mit einem Konstantstrom aufgeladen, so daß $u_{C14}$ linear ansteigt.

Wenn das Potential am Punkt 22a das Potential am Punkt 21a erreicht hat, wird der Komparator 20 an seinem Ausgang 20a auf HIGH umgeschaltet. Die Zeit für die Ladung des Kondensators 14, ausgehend von $u_{C14} = 0V$ bis zum Umschalten des Ausgangs 20a auf HIGH ist also ein Maß für die Temperatur. Diese Zeit wird im $\mu$C 11 gemäß einer frei wählbaren Kennlinie umgesetzt in einen Sollwert für die Drehzahl des Motors 9.

Hierzu dient die Kennlinienfunktion 23. Diese bestimmt aus dem vom A/D-Wandler 10 digitalisierten Temperaturwert die Motor-Solldrehzahl 23a. Hierfür erhält sie über eine EEPROM-Funktion 24 Wertevorgaben aus einem nichtflüchtigen Speicher, hier einem EEPROM 26. Das EEPROM 26 kann über eine Kommunikationsfunktion 28 und ein Businterface 30 Werte für eine neue Kennlinie erhalten, um das Temperaturverhalten des Motors zu ändern.

Die Kennlinienfunktion 23 gibt die ermittelte Solldrehzahl 23a an den Drehzahlregler 6 weiter, welcher die Motorbestromung steuert. Dies kann z.B. über eine Steuerung eines Pulsweitenmodulation-Generators (PWM-Generators) 34 oder eine Blocksteuerung 45 geschehen. Zu der Blocksteuerung wird beispielhaft auf DE 444 1 372.6 (intern: D183i) verwiesen.

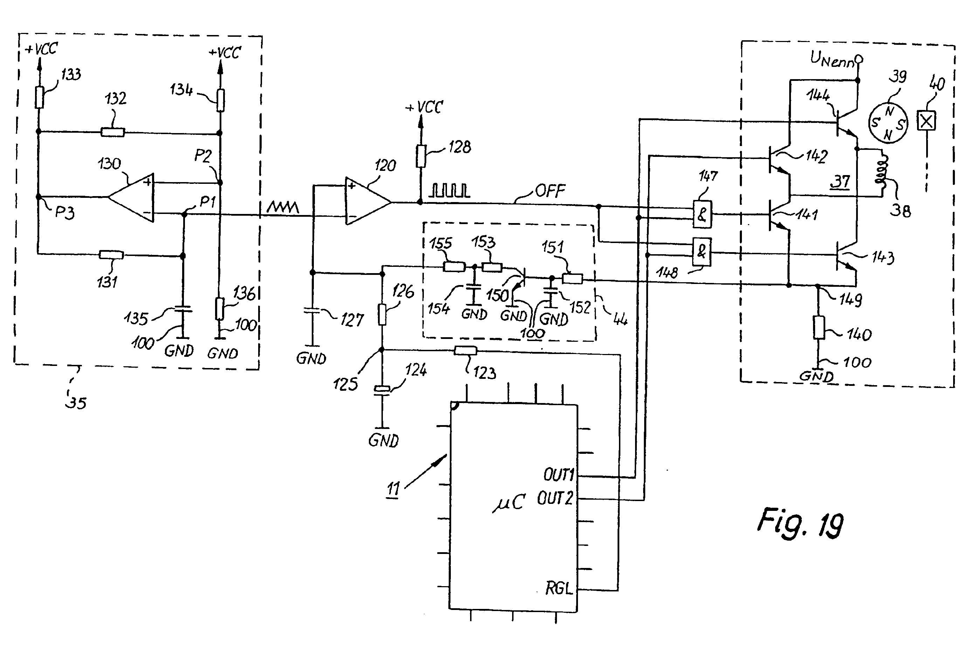

Der PWM-Generator 34 weist ein durch den Drehzahlregler geregeltes Stellsignal 33, einen Dreieckssignalgeber 35 und einen Komparator 120 auf. Für die Funktionsweise eines beispielhaften PWM-Generators 34 wird auf Fig. 19 verwiesen.

Als einfaches Beispiel ist in Fig. 2 ein elektronisch kommutierter Motor 9 mit einer einzigen Phase 38 dargestellt. Die Bestromung dieser Phase 38 geschieht durch eine Transistorendstufe 36, hier in Form einer Vollbrücke 37. Ein Hallgenerator 40 liefert einer Antriebsfunktion 42 Information über die augenblickliche Stellung des Rotors 39. Die Antriebsfunktion 42 sorgt für die richtige Kommutierung des Motors 9 und den sicheren Betrieb, z.B. bei Überlastung des Motors 9.

Eine Strombegrenzung 44 vermindert die Bestromung der Endstufe 36, falls der Strom in der einzigen Phase 38 zu hoch wird, z.B. beim Start des Motors.

Am Ende der Beschreibung sind für die in den einzelnen Figuren verwendeten elektronischen Bauteile bevorzugte Werte angegeben. Der Leser wird hierauf verwiesen.

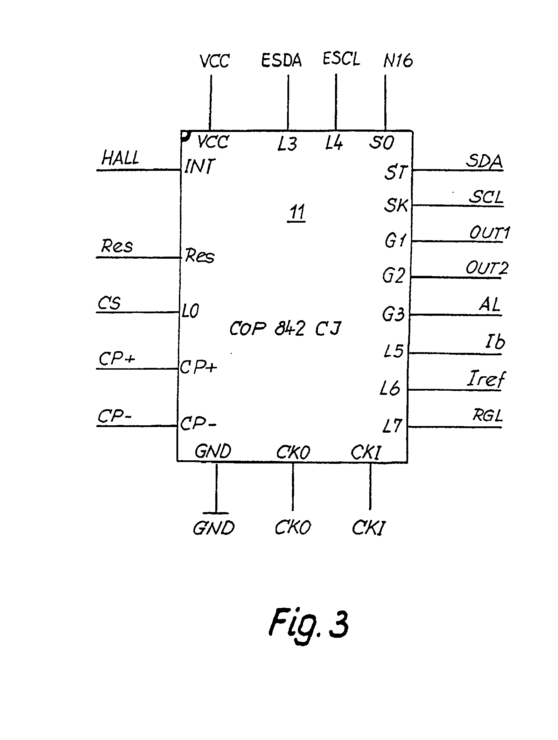

**Fig. 3** zeigt die Pinbelegung des beim Ausführungsbeispiel verwendeten Mikrokontrollers ($\mu$C) 11 vom Typ COP 842 CJ der Firma National Semiconductors. Die Beschriftung innerhalb des $\mu$C 11 entspricht der Beschriftung des Herstellers, die äußere Beschriftung der jeweiligen Leitungen zeigt die hauptsächlich in der Anmeldung verwendeten Bezeichnungen. Zur Kennzeichnung der Lage ist links oben ein schwarzer Viertelkreis eingezeichnet, der sich in den folgenden Figuren wiederfindet.

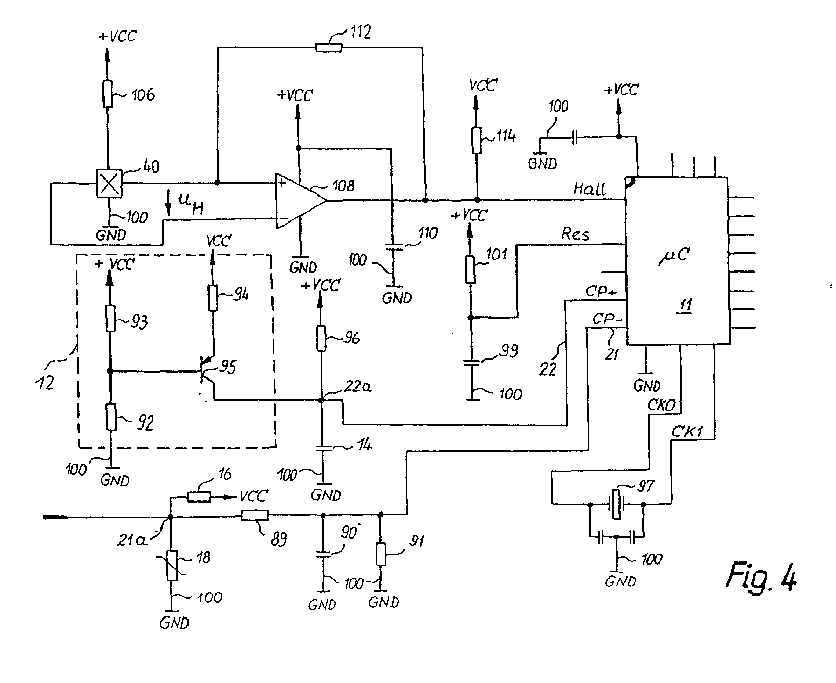

**Fig. 4** zeigt ein detailliertes Schaltbild des A/D-Wandlers 10 (Fig. 1 und 2) mit den Bauteilen für die A/D-Wandlung und die Verarbeitung des Hallsignals vom Hall-Sensor 40. Das Hallsignal liefert den Istwert der Motordrehzahl.

Ein Schwingquarz 97, der an die Anschlüsse CK0 und CK1 (vgl. Fig. 3) des $\mu$C 11 angeschlossen ist, gibt dessen Taktfrequenz vor, z.B. 10 MHz. Der Reset-Eingang Res (Fig. 3) ist über einen Kondensator 99 mit Masse 100 und über einen Widerstand 101 mit +Vcc verbunden. Diese beiden Bauelemente erzeugen in der üblichen Weise beim Einschalten einen Power-Up-Reset.

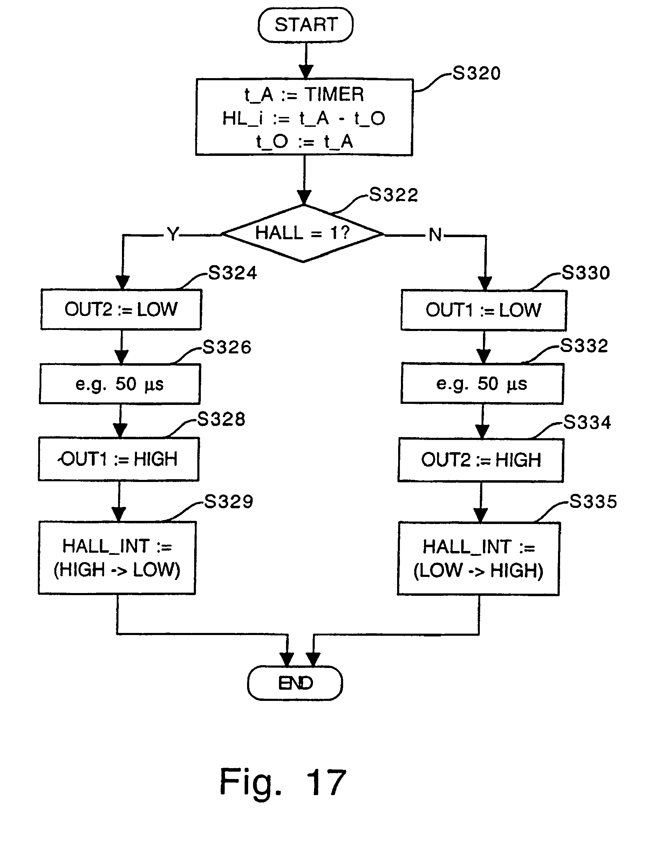

Der Hallgenerator 40, z.B. vom Typ HW101A, ist zur Stromversorgung über einen Widerstand 106 mit + Vcc, und mit Masse 100, verbunden. Sein Ausgangssignal $u_H$ wird den beiden Eingängen eines Komparators 108 (z.B. LM2901D) zugeführt, dessen Vcc-Eingang ein Siebkondensator 110 zugeordnet ist. Der Ausgang des Komparators 108 ist über einen Rückführwiderstand 112 mit dem positiven Eingang des Komparators 108 und über einen sogenannten Pullup-Widerstand 114 mit +Vcc verbunden. Weiterhin ist der Ausgang des Komparators 108 direkt mit dem Port Hall (Fig. 3) des Mikroprozessors 12 verbunden, so daß man an diesem ein vom Rotormagneten 39 gesteuertes Hallsignal erhält. Dieses Signal hat immer während einer Rotordrehung von 180° el. den Wert HALL = 0, und während der anschließenden Drehung von 180° el. den Wert HALL = 1. Seine Auswertung wird nachfolgend anhand von Fig. 17 erläutert. Jede Änderung von HALL = 1 zu HALL = 0, oder umgekehrt, bewirkt einen Interruptvorgang im $\mu$C 11.

Der NTC-Widerstand 18 des A/D-Wandlers 10 ist auf seiner einen Seite an Masse 100 angeschlossen. An seiner anderen Seite ist er mit dem Widerstand 16 verbunden, welcher auf seiner anderen Seite mit +Vcc verbunden ist. Die Verbindung 21a zwischen dem NTC-Widerstand 18 und dem Widerstand 16 ist über einen Schutzwiderstand 89 und ein aus einem Kondensator 90 und einem Widerstand 91 bestehendes Siebglied an den Ausgang CP- (Fig. 3) des $\mu$C 11 angeschlossen. Der Kondensator 14 ist an seiner einen Seite mit Masse 100 verbunden, an seiner anderen Seite mit einem Widerstand 96, welcher seinerseits mit +Vcc verbunden ist. Die Verbindung 22a zwischen dem Kondensator 14 und dem Widerstand 96 ist mit der Konstantstromquelle 12 und dem Eingang CP+ verbunden. Die Konstantstromquelle 12 weist einen pnp-Transistor 95 (z.B. BC8568) auf, dessen Basisspannung durch Widerstände 92 und 93 festgelegt ist und dessen Strom auf der Emitterseite durch einen Widerstand 94 begrenzt wird.

### A/D-Wandlung

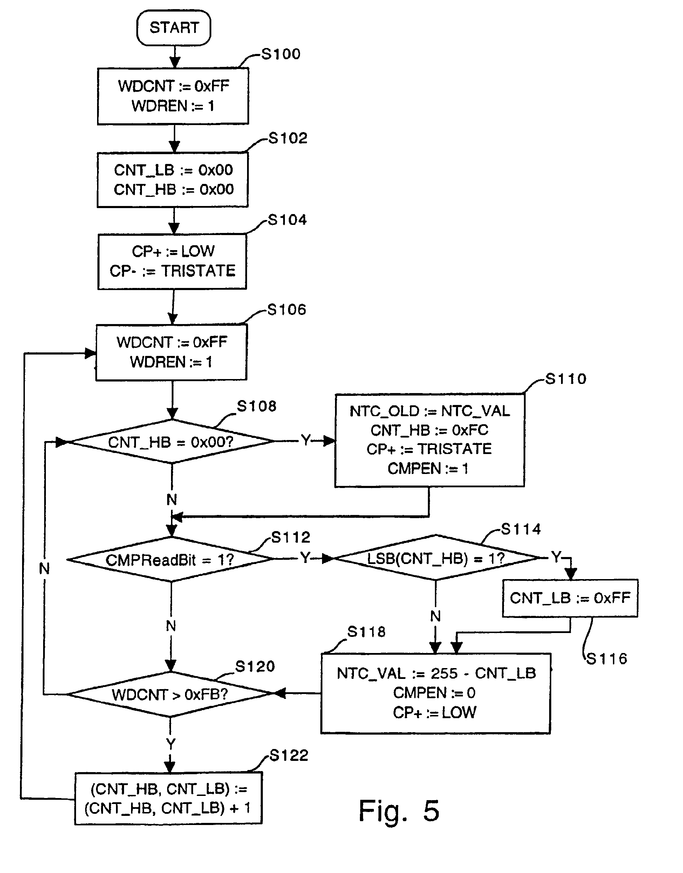

**Fig. 5** zeigt ein Flußdiagramm der A/D-Wandlung.

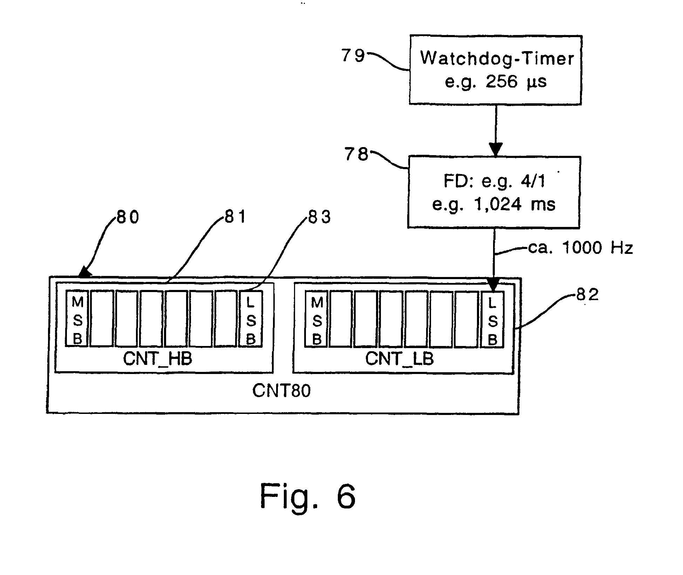

Im Schritt S100 der Fig. 5 wird ein Watchdog-Timer WDCNT 79 (Fig. 6) des $\mu$C 11 mit einem Hexadezimalwert 0xFF geladen (Hexadezimalwerte werden durch ein vorangestelltes 0x gekennzeichnet) und durch das Setzen des Bits WDREN auf 1 gestartet. Der Watchdog-Timer WDCNT 79 wird in einem Modus betrieben, in dem er in festen Zeitschritten seinen Wert dekrementiert und beim Erreichen von Null einen internen Reset im $\mu$C 11 auslöst. Um diesen Resetvorgang zu verhindern, muß der Watchdog-Timer WDCNT 79 von dem Programm periodisch nachgeladen werden. Dies bewirkt eine erhöhte Sicherheit, da der $\mu$C 11 z.B. bei einem Absturz des Programms nicht nachgeladen wird und deshalb automatisch einen Reset erhält und von neuem startet (Watchdog-Funktion).

In S102 werden die beiden Zählerregister CNT_LB 82 und CNT_HB 81 (Fig. 6) auf 0 gesetzt. Die Eingänge CP- und CP+ des Komparators 20 (vgl. Fig. 2 und Fig. 3) werden in S104 konfiguriert. CP+ wird auf LOW (niedrig, Masse) gesetzt, so daß der Kondensator 20 entladen wird. CP- wird auf TRISTATE gesetzt, so daß eine von dem Widerstand 16 und NTC-Widerstand 18 bestimmte Spannung an CP- anliegt. Der Zustand TRISTATE eines Ports bedeutet, daß der Port sich weder wie +Vcc noch wie Masse 100 verhält, sondern isoliert ist.

Die mit dem Watchdog-Timer WDCNT 79 gebildete Hauptschleife beginnt in S106. Der Watchdog-Timer WDCNT 79 wird (wie in S100) mit dem Wert 0xFF geladen und durch WDREN := 1 gestartet. Nach dem Durchlaufen der im folgenden beschriebenen Schritte S108 bis S118 wird in S120 überprüft, ob der Watchdog-Timer WDCNT 79 bereits den Wert 0xFB erreicht hat, also viermal dekrementiert worden ist. Ist dies der Fall (Y = YES/JA), so wird der aus den beiden Bytes CNT_LB 82 und CNT_HB 81 gebildete Zähler CNT80, den man als (CNT_HB, CNT_LB) darstellen kann (vgl. Fig. 6), in S122 inkrementiert und zu S106 zurückgesprungen. War in S120 der Watchdog-Timer WDCNT 79 größer als 0xFB, so erfolgt ein Sprung zurück zu S108. Da der Watchdog-Timer 79 in 256 μs-Schritten dekrementiert, entsprechen diese vier Dekrement-Schritte bis 0xFB einer Zeit von 1024 μs. Der aus CNT_LB 82 und CNT_HB 81 gebildete Zähler CNT80 hat also eine Auflösung von 1024 μs = 1,024 ms.

**Fig. 6** zeigt hierzu schematisch den Aufbau des aus CNT_LB 82 und CNT_HB 81 gebildeten Zählers CNT80. Die beiden 8 Bit-Zähler CNT_HB 81 und CNT_LB 82 werden zusammen als 16 Bit-Zähler CNT80 verwendet. Hierbei ist CNT_LB 82 das niedrige Wort (low byte) und CNT_HB 81 das hohe Wort (high byte). Das niedrigste Bit jedes Bytes ist jeweils mit LSB bezeichnet, und das höchste Bit mit MSB. Jedes Byte hat acht Bits.

Der Watchdog-Timer WDCNT 79 erniedrigt sich z.B. alle 256 μs um 1. Durch die Frequenzteilung von z.B. 4:1 in S106 und S120, Fig. 5, wird der Zähler CNT80 alle 1,024 ms inkrementiert. Dies entspricht einer Frequenz von ca. 1000 Hz. Findet bei dem Inkrementieren des CNT_LB 82 ein Überlauf statt, d.h. das CNT_LB 82 hat den Wert 0xFF und wird inkrementiert, so erhält das CNT_LB 82 den Wert 0x00, und ein Überlaufbit (carry bit) wird gesetzt. Nach dem Inkrement des CNT_LB 82 wird zum CNT_HB 81 eine Null unter Berücksichtigung des Überlaufbits addiert, d.h. bei jedem 256. Inkrement des CNT_LB 82 wird das CNT_HB 81 inkrementiert, und das CNT_HB 81 hat so eine Auflösung von ca. 256 ms und kann deshalb einen maximalen Zeitwert von ca. 65,5 s darstellen. Der Zähler CNT80, der aus den beiden 8-Bit-Zählern CNT_HB 81 und CNT_LB 80 zusammengesetzt ist, wirkt so als ein 16-Bit-Zähler, der, jeweils nach 4 Dekrement-Schritten des Watchdog-Timers WDCNT 79, um 1 inkrementiert wird.

Obwohl CNT_LB 82 und CNT_HB 81 zusammen als ein Zähler CNT80 wirken, haben sie mehrere unterschiedliche Funktionen:

- Das CNT_LB 82 dient bei der A/D-Wandlung als Zähler für die Zeit, die benötigt wird, um den Kondensator 14 über den Transistor 95 so weit aufzuladen, daß die Spannung an CP+ 22 so hoch ist wie die durch den NTC-Widerstand 18 temperaturabhängige Spannung an CP- 21, d.h. sein Zählerstand ist ein Maß für die Temperatur des NTC-Widerstands 18.
- Das CNT_HB 81 dient als Zähler für die Zeit zwischen aufeinanderfolgenden A/D-Wandlungen. Diese Zeit kann z.B. auf eine Sekunde eingestellt werden.
- Das niederwertigste Bit (LSB) 83 des CNT_HB 81 dient zusätzlich als Anzeige eines Überlaufs des CNT_LB 81 während der A/D-Wandlung.

Im folgenden werden die in dem unteren Teil der Watchdog-Timer-Schleife (Fig. 5) ablaufenden Schritte S108 bis S120 beschrieben.

In S108 wird überprüft, ob das CNT_HB den Wert 0x00 hat. Falls dies der Fall ist, wird in S110 der vorige NTC-Wert NTC_VAL in NTC_OLD gesichert, das CNT_HB wird auf 0xFC gesetzt, CP+ 22 wird auf TRISTATE gesetzt, so daß der Kondensator 14 über den mittels der Widerstände 92, 93 und 94 als Konstantstromquelle geschalteten Transistor 95 (Fig. 4) geladen wird und so die Spannung an CP+ 22 linear ansteigen läßt, und der Komparator 20 wird durch CMPEN := 1 gestartet. Das Register CNT_LB hat nach dem Umspringen von CNT_HB auf 0x00 ebenfalls den Wert 0x00, so daß es als Zähler für die Zeit wirkt, bis die an CP+ 22 liegende Spannung so groß wie die an CP- 21 liegende Spannung ist.

Das Setzen des Registers CNT_HB auf 0xFC gibt die Zeit zwischen den einzelnen A/D-Wandlungen vor. Da das Register CNT_HB eine Auflösung von ca. 256 ms hat, wird jeweils nach vier Inkrementen (0xFC auf 0xFD auf 0xFE auf 0xFF auf 0x00), also nach ungefähr einer Sekunde, eine neue A/D-Wandlung vorgenommen. Anstatt 0xFC kann ein anderer Wert gewählt werden, er muß aber größer als 0x00 sein, um nicht sofort eine neue A/D-Wandlung zu starten, und sein niederwertigstes Bit 83 (Fig. 6) muß 0 sein, um es als Anzeige eines Überlaufs des CNT_LB 82 während der A/D-Wandlung nutzen zu können.

Bis die durch den von der Konstantstromquelle 12 (Fig. 4) geladenen Kondensator 14 gegebene Spannung an CP+ 22 die durch den NTC-Widerstand 18 temperaturabhängige Spannung an CP- 21 erreicht hat, wird in Fig. 5 der untere Teil über S108 und S112 durchlaufen, ohne weitere Schritte auszuführen. Erreicht die Spannung an CP+ 22 die Spannung an CP- 21, so schaltet der Komparator sein Komparator-Lesebit (CMPReadBit) auf HIGH, und von dem Vergleich in S112 wird zu S114 gesprungen.

In S114 wird anhand des niederwertigsten Bits 83 (LSB) von CNT_HB 81 überprüft, ob während der A/D-Wandlung ein Überlauf des CNT_LB 82 stattgefunden hat. Der Wertebereich 0x00 bis 0xFF des CNT_LB 82 soll möglichst vollständig für die D/A-Wandlung ausgenutzt werden. Deshalb kann es innerhalb der Fertigungstoleranzen der Komparatorbeschaltung vorkommen, daß für Werte im oberen Bereich, also für niedrige Temperaturen, noch ein Überlauf stattfindet. Dieser kann deshalb erkannt werden, weil das niederwertigste Bit 83 beim Setzen des CNT_HB 81 in S110 den Wert 0 erhalten hat. Hat ein Überlauf des CNT_LB stattgefunden, so hat das niederwertigste Bit 83 des CNT_HB 81 den Wert 1. Ist dies der Fall, so erhält CNT_LB in S116 den maximalen Wert 0xFF zugewiesen, ansonsten erfolgt von S114 direkt ein Sprung zu S118.

In S118 wird der Wert von CNT_LB invertiert und im Register NTC_VAL abgelegt . Das Invertieren macht aus CNT_LB den Wert (255 - CNT_LB), so daß jetzt ein kleiner NTC-Wert NTC_VAL einer niedrigen Temperatur und ein großer NTC-Wert NTC_VAL einer hohen Temperatur entspricht. Der Komparator wird durch CMPEN := 0 gestoppt und CP+ 22 wird auf LOW gesetzt, damit der Kondensator 14 vor der nächsten A/D-Wandlung entladen wird. Letztere findet statt, wenn das CNT_HB den Wert Null erreicht.

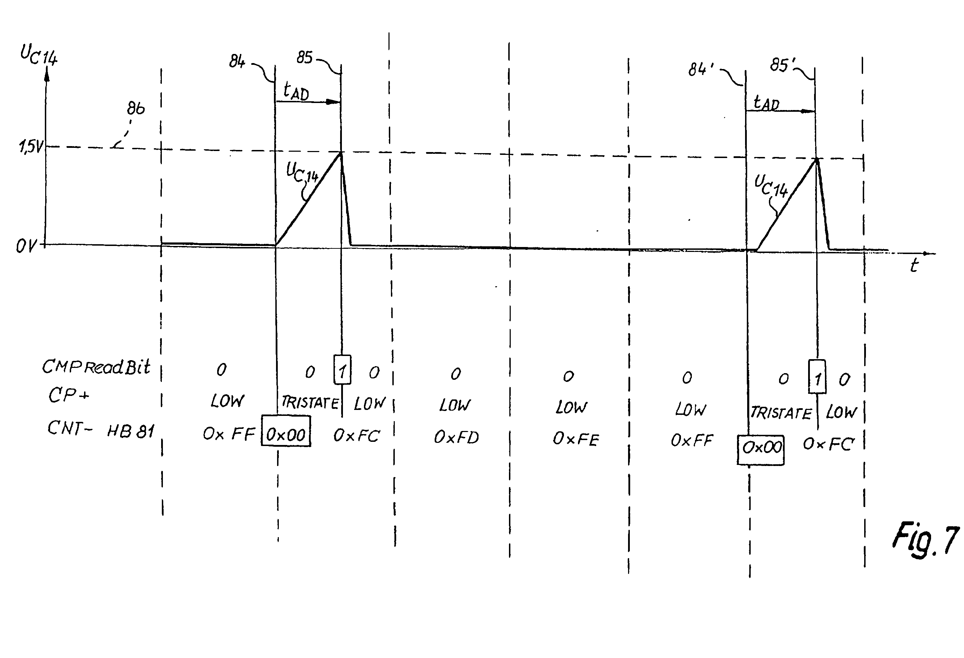

**Fig. 7** zeigt ein Zeitdiagramm der A/D-Wandlung. CNT_HB 81 dient als Zähler für die Zeit zwischen den einzelnen A/D-Wandlungen. Es hat am Anfang den Wert 0xFF, und CP+ ist auf LOW, der Kondensator 14 ist also entladen.

Zum Zeitpunkt 84 bzw. 84' springt CNT_HB 81 auf 0x00 um. Damit startet die A/D-Wandlung. CNT_HB 81 wird auf 0xFC gesetzt, um den Zeitraum bis zur nächsten A/D-Wandlung festzulegen, und CP+ wird auf TRISTATE gesetzt, um ein Aufladen des Kondensators 14 zu ermöglichen.

Zum Zeitpunkt 85 bzw. 85' erreicht die Spannung $u_{C14}$ des Kondensators 14 das Potential 86 am Knotenpunkt 21a, und die Variable CMPReadBit ändert ihren Zustand von 0 auf 1. Jetzt wird geprüft, ob ein Überlauf von CNT_LB 82 stattgefunden hat, der Komparator 20 (Fig. 2) wird ausgeschaltet, und CP+ wird auf LOW geschaltet, um den Kondensator 14 wieder zu entladen. Die nächste A/D-Wandlung geschieht beim Inkrement des CNT_HB von 0xFF auf 0x00, also zum Zeitpunkt 84'.

**Hysterese- und Sensorabrißfunktion:**

Der eigentlichen Berechnung der Solldrehzahl durch die Kennlinienfunktion sind eine Hysterese- und eine Sensorabrißfunktion vorgeschaltet.

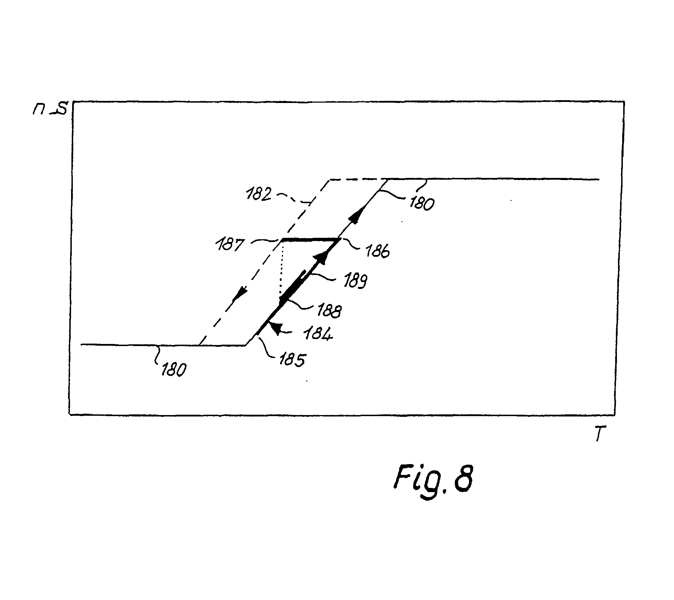

**Fig. 8** zeigt eine Kennlinie 180 (durchgezogene dünne Kurve) mit Hysterese 182 (gestrichelte dünne Kurve), in die ein Beispielverlauf 184 von Temperatur und Solldrehzahl eingetragen ist (dicke durchgezogene Kurve).

Die Solldrehzahl n_s verläuft bei zunehmender Temperatur T von dem Punkt 185 entlang der durchgezogenen Kennlinie 180 bis zum Punkt 186.

Bei abnehmender Temperatur bleibt die Solldrehzahl so lange konstant, bis die gestrichelte Hysteresekurve bei Punkt 187 erreicht wird. Daraufhin springt die Solldrehzahl auf die für diese Temperatur durch die durchgezogene Kennlinie vorgegebene Solldrehzahl bei Punkt 188.

Bei ansteigender Temperatur verläuft die Solldrehzahl entlang der Kennlinie 180 vom Punkt 188 zum Punkt 189, an dem der Beispielverlauf 184 endet. Die Hysterese wirkt so einem Schwingen der Drehzahl entgegen, weil bei abnehmender Temperatur die Drehzahl erst dann reduziert wird, wenn die Temperatur um einen bestimmten Mindestwert gefallen ist.

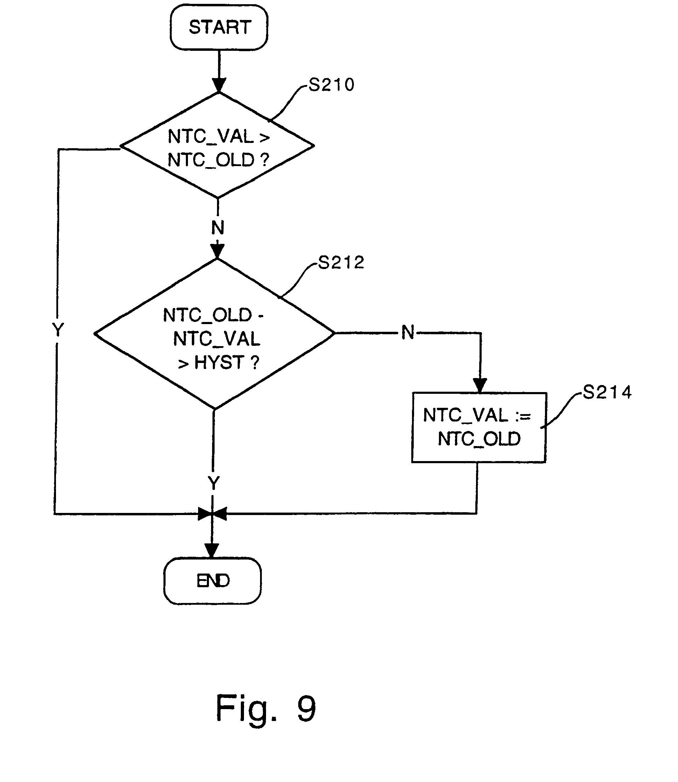

**Fig. 9** zeigt das Hysterese-Flußdiagramm. Die Hysterese wird dadurch erreicht, daß der vom A/D-Wandler digitalisierte Temperaturwert NTC_VAL mit dem vorherigen und zuvor abgespeicherten Wert NTC_OLD verglichen wird. Ist NTC_VAL größer als NTC_OLD, so wird er für die Berechnung der Solldrehzahl n_s verwendet (S210), weil die Temperatur zugenommen hat. Ist die Antwort "Nein", so wird in Schritt S212 NTC_VAL von NTC_OLD subtrahiert. Ist die Differenz größer als ein Hysteresewert HYST, so wird die Hystereseroutine verlassen und mit dem Wert NTC_VAL weitergearbeitet (S212). Ansonsten wird dem Wert NTC_VAL der alte Wert NTC_OLD zugeordnet (S214). Der Hysteresewert HYST kann bei der Konfiguration des Motors in den RAM-Bereich des $\mu$C 11 geladen werden und ist somit ebenfalls frei programmierbar. Der Motor erhält durch die Hysterese-Funktion einen ruhigen Drehzahlverlauf.

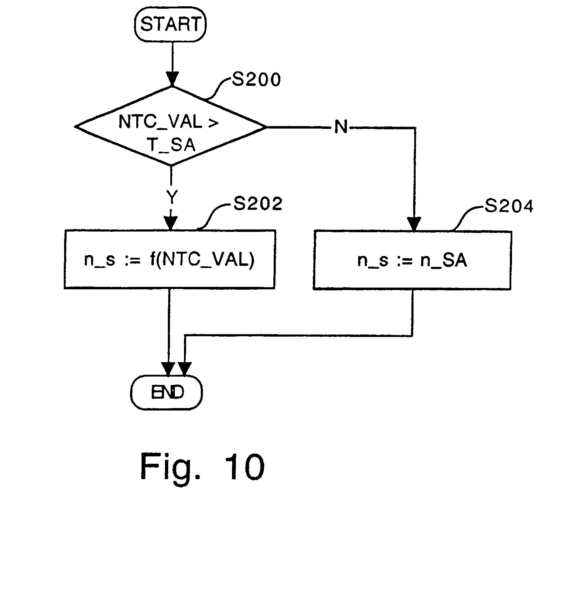

**Fig. 10** zeigt ein Flußdiagramm einer Sensorabrißfunktion. Die Sensorabrißfunktion ist eine Sicherheitsfunktion, die bei einer Beschädigung des NTC-Widerstands 18 (Fig. 4) bzw. von dessen Anschlüssen, einem sogenannten Sensorabriß, eine sogenannte Sensorabriß-Drehzahl als Solldrehzahl vorgibt. Ist z.B. der NTC-Widerstand defekt, und hat er den Widerstandswert Unendlich, so erhält man einen sehr kleinen NTC-Wert NTC_VAL. Daher wird ein Sensorabriß-Temperaturwert T_SA definiert, und bei allen NTC-Werten NTC_VAL, die kleiner als T_SA sind, wird davon ausgegangen, daß ein Sensorabriß vorliegt.

Der aus der zuvor beschriebenen A/D-Wandlung erhaltene NTC-Wert NTC_VAL wird in S200 mit dem Sensorabriß-Temperaturwert T_SA, der ebenfalls 1 Byte groß ist (z.B. T_SA := 0x38), verglichen. Ist NTC_VAL größer, so wird die Berechnung der Solldrehzahl n_s wie in den folgenden Figuren beschrieben fortgesetzt (S202). Ist NTC_VAL jedoch kleiner, liegt also ein Sensorabriß vor, so wird die komplette Solldrehzahlberechnung übersprungen, und für die Solldrehzahl n_s wird eine Sensorabriß-Drehzahl n_SA verwendet (S204), gewöhnlich die maximale Drehzahl des Motors.

Die Werte T_SA und n_SA werden bei der Konfiguration des Motors in den RAM-Bereich des $\mu$C 11 geladen und sind somit frei programmierbar.

**Kennlinienfunktion**

Der durch die A/D-Wandlung ermittelte NTC-Wert NTC_VAL wird nun in eine Solldrehzahl umgerechnet.

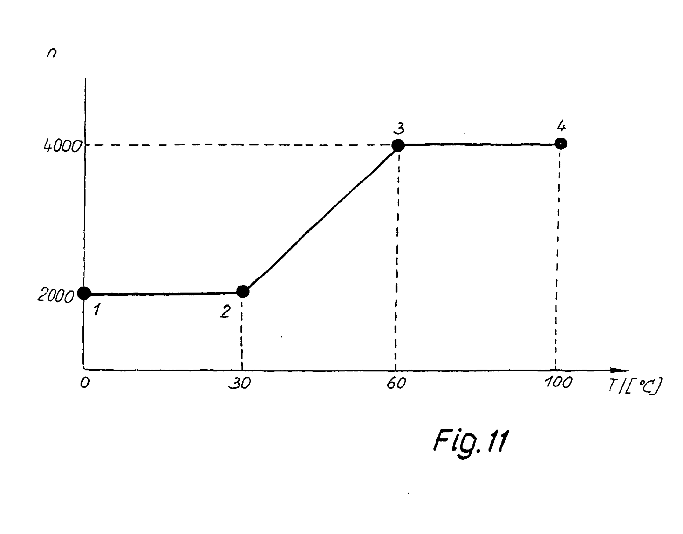

**Fig. 11** zeigt beispielhaft eine durch vier Kennliniendefinitionspunkte (ausgefüllte Punkte mit den Zahlen 1 bis 4) definierte Kennlinie n = f(T). Z.B. entspricht eine Temperatur von 0° C (Punkt 1) einer Drehzahl von 2000 U/min, ebenso eine Temperatur von 30° C (Punkt 2). Eine Temperatur von 60° C (Punkt 3) entspricht 4000 U/min, ebenso eine Temperatur von 100° C (Punkt 4). Zwischen den Temperatur-Drehzahl-Punkten 1, 2, 3 und 4 wird bei diesem Ausführungsbeispiel linear interpoliert. Die Berechnung der benötigten Zwischenpunkte geschieht durch den $\mu$C 11.

Die Definition einer Kennlinie durch wenige Kennliniendefinitionspunkte spart viel Speicher und erlaubt eine einfache Änderung der Kennlinie durch Speicherung von Punkten mit neuen Werten. Falls eine Sensorabrißfunktion verwendet wird, wird der Definitionspunkt mit der niedrigsten Temperatur an der auf die Sensorabrißtemperatur T_SA (vgl. S200 in Fig. 10) folgenden Temperatur T_SA + 1 gewählt. Falls keine Sensorabrißfunktion verwendet wird, wird der Definitionspunkt mit der niedrigsten Temperatur als kleinste meßbare Temperatur (Kennlinientemperaturwert 0x00, entspricht z.B. einer Temperatur von -62 °C) gewählt.

Der Definitionspunkt mit der höchsten Temperatur kann als die höchstmögliche Temperatur gewählt werden (0xFF bei einem Byte Speicherplatz). Eine Alternative besteht darin, für alle Temperaturwerte, die größer als der letzte Definitionspunkt sind, die Drehzahl des letzten Definitionspunkts zu wählen. Dann kann der letzte Definitionspunkt auch einen niedrigeren Temperaturwert als 0xFF haben.

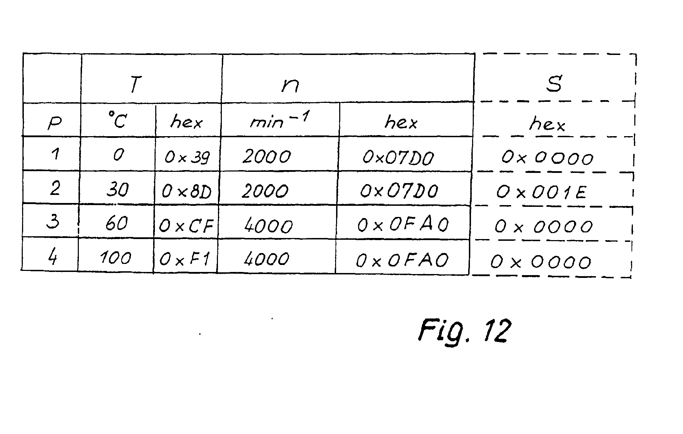

**Fig. 12** zeigt die für jeden Kennliniendefinitionspunkt P der Kennlinie aus Fig. 11 die gespeicherten Temperatur- und Drehzahlwerte. Die Werte sind jeweils in physikalischen und programminternen Größen angegeben. Jeder Temperaturwert T belegt ein Byte Speicher, der zugehörige Drehzahlwert n zwei Byte. Evtl. wird noch eine zugehörige Steigung S = $\Delta$n / $\Delta$T mit zwei Byte gespeichert, um die Interpolation zu beschleunigen. Das höchstwertigste Bit der zwei Bytes der Steigung dient dabei als Vorzeichen-Bit, so daß auch negative Steigungen möglich sind. Die Zuordnung der programminternen Temperaturspeicherwerte (0x00 bis 0xFF) zu der physikalischen Außentemperatur hängt von der Beschaltung des A/D-Wandlers ab. So kann z.B. ein Temperaturspeicherwert von 0x10 auch einer negativen physikalischen Temperatur von -10 °C entsprechen.

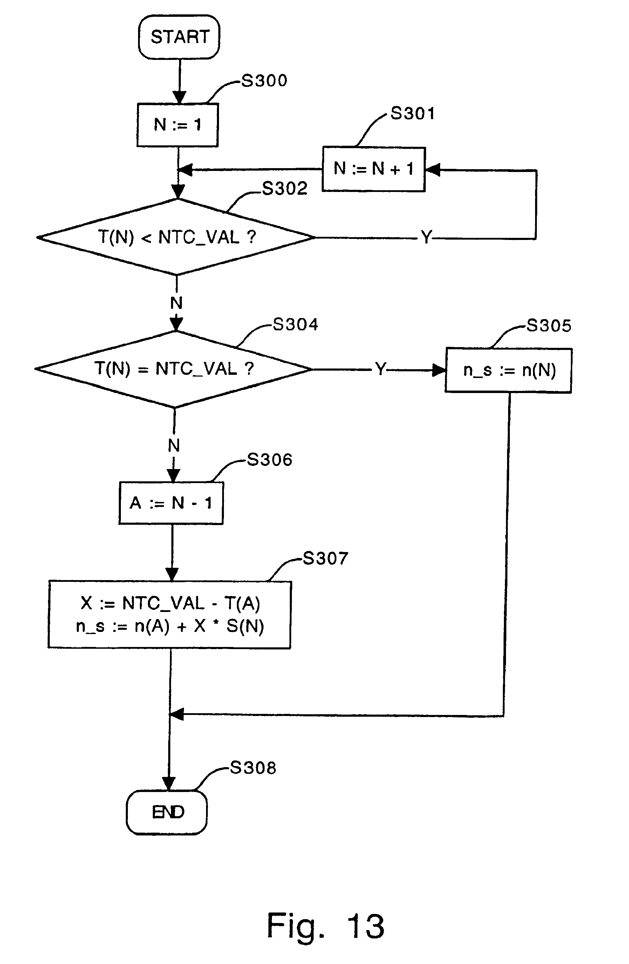

**Fig. 13** zeigt ein Flußdiagramm für die Solldrehzahl-Berechnungsroutine. Die Kennliniendefinitionspunkte besitzen in diesem Beispiel jeweils einen Temperaturwert, einen Drehzahlwert und eine Steigung, die für den Bereich von dem Kennliniendefinitionspunkt bis zu dem folgenden Kennliniendefinitionspunkt gilt. Beim Starten des $\mu$C 11 werden die Temperaturwerte T (Fig. 12) aus dem EEPROM 26 ausgelesen und in den RAM-Bereich des $\mu$C 11 eingelesen, um einen schnellen Zugriff zu ermöglichen. Die Drehzahlwerte und die Steigungswerte verbleiben (aus Gründen des begrenzten RAM-Speichers) im EEPROM 26 und werden bei Bedarf von dort geladen. Im EEPROM 26 sind alle Temperaturwerte hintereinander in einem Block gespeichert, die Drehzahl- und gegebenenfalls Steigungswerte hintereinander in einem anderen Block. Falls genügend RAM-Speicher vorhanden ist, so können auch die Drehzahl und die Steigung in den RAM-Speicher des $\mu$C 11 geladen werden.

Beim Sprung in die Solldrehzahl-Berechnungsroutine wird in S300 der Zähler N auf 1 gesetzt. Die Temperaturwerte sind als Tabelle T(N) abgelegt, und in S302 wird verglichen, ob der N-te Temperaturwert T(N) kleiner als NTC_VAL ist. Ist dies der Fall, so wird nach S301 gesprungen, und N wird um 1 erhöht. Daraufhin wird wieder nach S302 gesprungen. Ist NTC_VAL nicht mehr größer als T(N), so weiß man, daß entweder NTC_VAL = T(N) ist, oder zwischen T(N) und T(N-1) liegt. In S304 wird auf Gleichheit geprüft. Besteht Gleichheit, so wird der Solldrehzahl n_s der Solldrehzahlwert n(N) des Kennliniendefinitionspunktes N zugeordnet und an das Ende gesprungen.

Ist in S304 nicht T(N) = NTC_VAL, so wird in S306 der Variablen A der Wert N - 1 zugeordnet, A entspricht also dem dem Kennliniendefinitionspunkt N vorhergehenden Kennliniendefinitionspunkt.

In S307 wird dann schließlich die Solldrehzahl n_s für NTC_VAL berechnet.

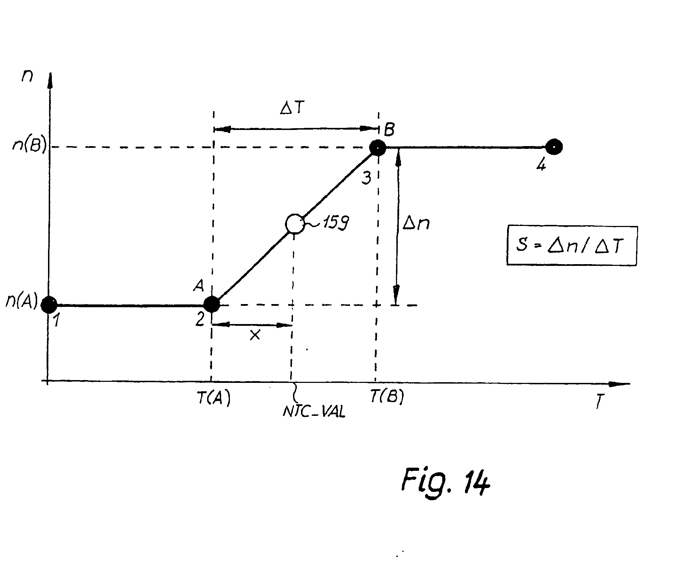

**Fig. 14** zeigt hierzu ein Beispiel für einen Wert NTC_VAL 159, der zwischen dem zweiten und dem dritten Definitionspunkt einer Kennlinie liegt. A hat also den Wert 2.

Der Abstand X zwischen dem Temperaturwert T(A) und NTC_VAL wird durch Subtraktion ermittelt (S307). Die zu NTC_VAL zugehörige Solldrehzahl n_s wird durch Addition des Produkts aus Steigung S(N) und X zu der Drehzahl n(A) von Punkt A ermittelt, also $n_S := n(A) + X * S(N)$.

Eine mögliche Variante zu dieser Art der Interpolation besteht darin, die Steigung nach links, also von dem jeweiligen Kennliniendefinitionspunkt N in Richtung des Kennliniendefinitionspunkts N - 1, zu definieren. In diesem Fall geschieht die Berechnung von n_s (S306, S307) nicht von Punkt N - 1 aus, sondern von Punkt N.

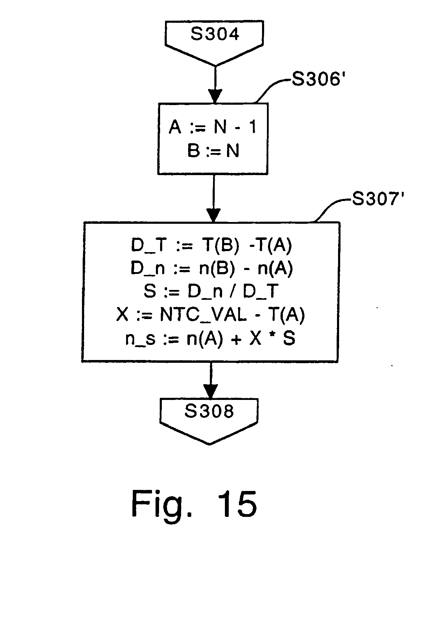

**Fig. 15** zeigt die Berechnung der Solldrehzahl für den Fall, daß bei den Kennliniendefinitionspunkten keine Steigung mit abgespeichert ist. Die Schritte S300 bis S305 aus Fig. 13 werden identisch ausgeführt. Falls in S304 jedoch nicht T(N) = NTC_VAL ist, so werden in S306' beide den NTC_VAL 159 (Fig. 14) umgebenden Kennliniendefinitionspunkte A := N - 1 und B := N definiert, siehe wieder Fig. 14. In S307' wird nun die Steigung S zwischen Punkt A und B von Punkt A aus berechnet. Die Temperaturdifferenz D_T ($\Delta$T) wird durch Subtraktion von T(A) von T(B) berechnet, die Drehzahldifferenz D_n ($\Delta$n) durch Subtraktion von n(A) von n(B) und die Steigung S durch Division von D_n durch D_T. Der Abstand X zwischen NTC_VAL und dem Temperaturwert T(A) und die Solldrehzahl n_S werden wie in Fig. 13 berechnet.

Aus der Beschreibung von Fig. 15 ist ersichtlich, daß das Abspeichern einer Steigung zu jedem Kennliniendefinitionspunkt einen Teil der Berechnungen in S307 (Fig. 13) erspart und damit auch Programm-Code und Programm-Abarbeitungszeit.

**Umrechnung der Solldrehzahl in eine "Hall-Länge" HL_s**

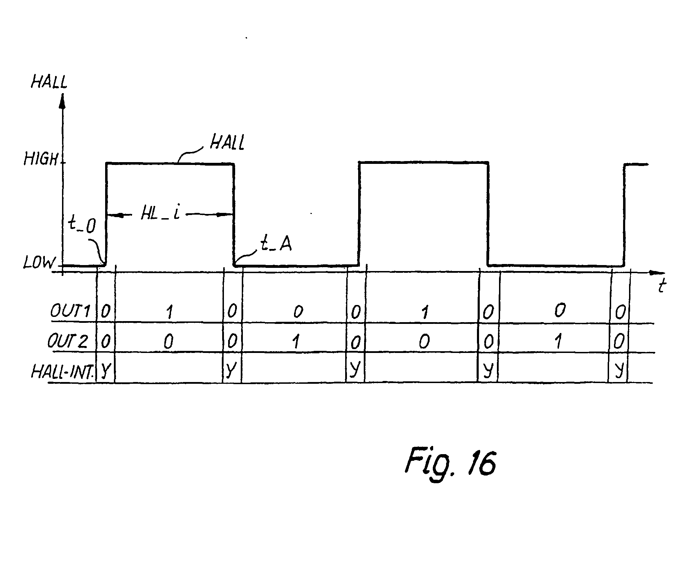

**Fig. 16** zeigt ein Diagramm mit dem Hallsignal HALL (Fig. 4), das am Port INT des $\mu$C 11 (Fig. 4) anliegt, den zugehörigen Werten für OUT1, OUT2 (Fig. 19) und den Zeitpunkten für das Auftreten der Hall-Interrupts. Anhand des Signals HALL wird die Kommutierung der Signale OUT1 und OUT 2 (Fig. 19) für die Steuerung des Motors 9 und die Berechnung der Ist-Hall-Länge HL_i vorgenommen, wie es hier in einer beispielhaften Ausführung gezeigt wird. Jeder Wechsel von HALL löst in dem $\mu$C 11 einen Hall-Interrupt aus, welcher in der Fig. 16 durch ein Y gekennzeichnet ist. Da die Kommutierung sehr präzise sein muß, damit der Motor ruhig läuft, hat dieser Interrupt Vorrang vor allen anderen Vorgängen im Motor, d.h. er unterbricht alle anderen, gerade laufenden Prozesse, wobei aber der gerade in Arbeit befindliche Befehl noch ausgeführt wird, anschließend die Befehlsfolge dieses Interrupts abläuft, und dann der zuvor unterbrochene Prozess wieder fortgesetzt wird.

**Fig. 17** zeigt eine beispielhafte Hall-Interruptroutine, die bei jedem Hall-Interrupt ausgeführt wird.

In S320 wird die Hall-Länge HL_i bestimmt. Ein aktueller Timerwert t_A wird aus einem Timer ausgelesen, und durch die Subtraktion des gespeicherten Timerwerts t_O vom Zeitpunkt des vorhergehenden Timer-Interrupts wird die Hall-Länge HL_i := t_A - t_O berechnet. Daraufhin wird der aktuelle Timerwert t_A in t_O gespeichert (S320). Die Auflösung des in diesem Ausführungsbeispiels verwendeten Timers ist 1 $\mu$s, die Hall-Länge HL_i liegt also in $\mu$s vor. Sie ist ein Maß für die Drehzahl des Motors 9.

In den folgenden Schritten wird die Kommutierung ausgeführt. In S322 wird geprüft, ob HALL = 1 (HIGH) ist. Ist HALL = 1, so wird in S324 OUT2 auf LOW gesetzt. Jetzt sind OUT1 und OUT2 auf LOW, und in S326 wird eine zeitliche Kommutierungslücke eingefügt, um bei der Kommutierung einen Kurzschluß in der Brückenschaltung 37 zu verhindern. Die Kommutierungslücke hat z.B. eine Dauer von 50 $\mu$s. In S328 wird OUT1 auf HIGH gesetzt. In S329 wird schließlich der Port HALL konfiguriert, bei welcher Flanke er einen Hall-Interrupt HALL_INT auslösen soll. Die Flanke kann entweder so eingestellt werden, daß bei dem Übergang HIGH nach LOW (fallende Flanke) ein Interrupt ausgelöst wird, oder aber bei dem Übergang von LOW nach HIGH (steigende Flanke). Da in dem Zweig S324 bis S329 das Hall-Signal auf HIGH ist, muß der Port HALL auf einen Interrupt bei fallender Flanke, also HIGH nach LOW eingestellt werden, damit beim nächsten Hall-Wechsel wieder ein Hall-Interrupt ausgelöst wird.

Ist in S322 HALL = 0 (LOW), so geschieht in S330 - S335 analog die umgekehrte Kommutierung und das umgekehrte Setzen von HALL_INT. Für die Realisierung einer zeitlichen Verschiebung der Kommutierungszeitpunkte wird auf DE 197 00 479.2 (intern: D201i) verwiesen.

Die Umrechnung der Solldrehzahl n_s mit der Einheit U/min in eine "Hall-Länge" HL_s wird im folgenden aufgezeigt. Für die Hall-Länge HL' in Sekunden gilt

$$HL' = T / P$$

mit der Periodendauer T für eine Rotordrehung in s und der Polzahl P des Rotors. Mit

$$T = 1 / f$$

$$f = n / 60$$

wobei f die Frequenz in Hz und n die Drehzahl in Umdrehungen pro Minute ist, ergibt sich

$$HL' = 60 \ [s] \ / \ (n/[min^{-1}] \ P)$$

Da die über den Hall-Sensor gemessene Hall-Länge in $\mu$s vorliegt, wird HL' zu HL_s renormiert

$$HL\_s = 1 \ 000 \ 000 \ HL'$$

Für P = 4, also einen vierpoligen Rotor, ergibt sich

$$HL\_s = 15 \ 000 \ 000 \ [\mu s] \ / \ (n \ / \ [min^{-1}]).$$

Der gewünschten Drehzahl n_s = 2870 $min^{-1}$ entspricht z.B. eine "Hall-Länge" HL_s von

$$HL\_s = 15 \ 000 \ 000 \ \mu s \ / \ 2870 = 5226 \ \mu s.$$

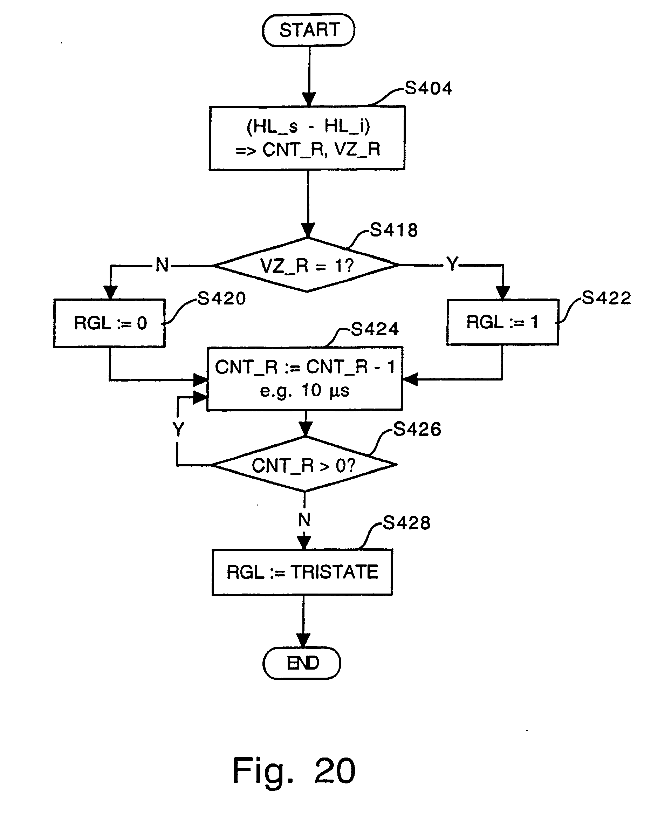

Die maschineninterne Hexadezimaldarstellung hierfür ist 0x146A. Zur Auswertung von HL_i und HL_s vergleiche Fig. 20.

**EEPROM-Funktion**

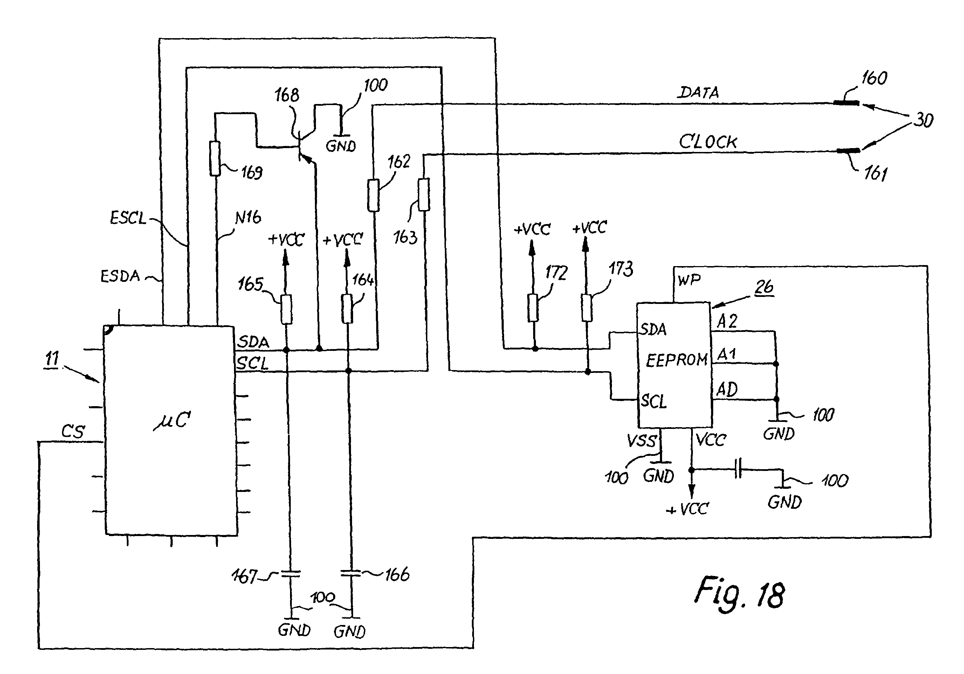

**Fig. 18** zeigt den Ausschnitt der Schaltung, der das EEPROM 26 und das Businterface 30 betrifft. Die Pinbelegung des $\mu$C 11 ist wieder Fig. 3 zu entnehmen. Gleiche oder gleich wirkende Teile wie in den vorhergehenden Figuren sind mit denselben Bezugszeichen bezeichnet wie dort. Das EEPROM 26 ist z.B. vom Typ "2-Wire Serial CMOS EEPROM AT24C01A" (ATMEL)

Das EEPROM 26 erhält an seinem Dateneingang SDA das Signal ESDA (Fig. 3) des $\mu$C 11 und an seinem Eingang SCL das Signal ESCL. Beide Leitungen sind über Widerstände 172, 173 mit +Vcc verbunden.

Der Schreibschutzeingang WP des EEPROM 26 ist mit dem Pin CS (Chip Select) des $\mu$C 11 verbunden. Ist CS auf HIGH, so ist das EEPROM 26 schreibgeschützt, ist CS auf LOW, so können Daten in das EEPROM 26 geschrieben werden. Die Anschlüsse VSS, AD, A1 und A2 des EEPROM 26 sind mit Masse 100 verbunden, und der Anschluß VCC des EEPROM 26 mit +Vcc.

Die Leitungen ESDA und ESCL stellen also den seriellen Bus zwischen dem $\mu$C 11 und dem EEPROM 26 dar, der als IIC-Bus betrieben werden kann.

Normalerweise wird das EEPROM 26 in der Fabrik einmal über das Businterface 30 programmiert, eine Neuprogrammierung ist jedoch jederzeit möglich. Auch kann das EEPROM 26 z.B. als Betriebsdatenspeicher dienen, z.B. für Einschaltzyklen, maximal aufgetretene Temperatur, Betriebsstunden und Fertigungsdaten.

Das Businterface 30 arbeitet mit einem IIC-Bus. Es verfügt über eine Datenleitung DATA mit einem Anschluß 160, die über einen Widerstand 162 an den Anschluß SDA des $\mu$C 11 angeschlossen ist. Vom Anschluß SDA führt ein Widerstand 165 zu +Vcc und ein Kondensator 167 zu Masse 100. Außerdem ist der Anschluß SDA mit dem Emitter eines pnp-Transistors 168 verbunden, dessen Kollektor mit Masse 100 und dessen Basis über einen Widerstand 169 mit dem Anschluß N16 des $\mu$C 11 verbunden sind.

Weiterhin hat das Businterface 30 eine Taktleitung CLOCK mit einem Anschluß 161, die über einen Widerstand 163 an den Anschluß SCL des $\mu$C 11 angeschlossen ist. Vom Anschluß SCL des $\mu$C 11 führt ein Widerstand 164 zu +Vcc und ein Kondensator 166 zu Masse 100.

Die Schaltung mit dem pnp-Transistor 168 dient dazu, sowohl den Ausgang N16 als auch den Eingang SCL des $\mu$C 11 mit der bidirektionalen Leitung DATA des IIC-Buses zu verbinden.

Für eine weitergehende Beschreibung des EEPROM 26, des Businterfaces 30 und deren Programmierung wird auf DE 198 26 458.5 (intern: D215) verwiesen.

Ein Paßwortschutz kann dadurch verwirklicht werden, daß bei der Übertragung von zwei besonderen aufeinanderfolgenden Bytes von dem externen IIC-Bus 30 zu dem $\mu$C 11, z.B. den Bytes 0xFA und 0x4A, in dem $\mu$C 11 ein Bit B_ACCESS in einer Speicherstelle ACCESS gesetzt wird, und bei gesetztem B_ACCESS zusätzliche Funktionen zum Verändern von Parametern, zum Auslesen des EEPROM 26 und/oder zum Beschreiben des EEPROM 26 zur Verfügung stehen. So ist z.B. ein Schutz vor einem unerlaubten Ändern der Kennlinie durch den Kunden möglich.

Weiterhin kann über den Bus 30 ein Betriebsstundenzähler abgefragt werden. Dieser wird dadurch verwirklicht, daß beim Start des Lüfters ein aus drei Byte bestehender 24-Bit-Wert WRK_TIME aus dem EEPROM 26 in den µC 11 geladen wird, und bei jedem 10. Beginn einer A/D-Wandlung, also in dem vorherigen Beispiel jede 10. Minute, der 24-Bit-Zähler WRK_TIME um 1 inkrementiert und in das EEPROM 26 zurückgeschrieben wird. Der Wert WRK_TIME kann dann z.B. über den IIC-Bus 30 abgefragt werden. Das Abzählen von je 10 A/D-Wandlungen geschieht über einen weiteren Zähler WRK_10.

## Regelung des Motors

**Fig. 19** zeigt den für Regelung und Antrieb des Motors wichtigen Teil der Schaltung. Die Belegung der Anschlüsse des µC 11 ist wieder Fig. 3 zu entnehmen. Die Ausgänge OUT1 und OUT2 des µC 11 steuern die als H-Brücke 37 geschalteten npn-Transistoren 141, 142, 143 und 144. Je nachdem, ob OUT1 auf HIGH und OUT2 auf LOW oder umgekehrt gesetzt sind, verläuft der Strom durch die Statorwicklung 38 in die eine oder die andere Richtung. Zwischen dem Umschalten sind OUT1 und OUT2 kurzzeitig beide auf LOW, um einen Kurzschluß in der Brücke 37 verhindern. Die Kommutierung erfolgt elektronisch, und die Lage des Rotors 39 wird über den Hallsensor 40 erfaßt, der bei Fig. 4 näher beschrieben ist.

Ein Ausgang RGL des µC 11 ist über einen Widerstand 123 an einen Kondensator 124 angeschlossen. Wird RGL auf HIGH gesetzt, so wird der Kondensator 124 aufgeladen, ist RGL auf LOW, so wird der Kondensator entladen, und ist RGL auf TRISTATE, so ist der Kondensator 124 von RGL abgekoppelt und hält seine Spannung. Ohne die Strombegrenzung 44, welche weiter unten beschrieben wird, könnte der Punkt 125 direkt mit dem Pluseingang des Komparators 120 verbunden werden.

Ist der npn-Transistor 150 nicht leitend, die Strombegrenzung 44 also inaktiv, so stellt sich über den Widerstand 126 an einem kleineren Kondensator 127 die gleiche Spannung wie die des Kondensators 124 ein. Über den Ausgang RGL des µC 11 kann also die Spannung an dem Pluseingang des Komparators 120 beeinflußt werden.

An dem Minuseingang des Komparators 120 liegt ein durch einen Dreiecksoszillator 35 erzeugtes Dreiecksignal an. Der Dreiecksoszillator 35 weist einen Komparator 130 auf. Vom Ausgang P3 des Komparators 130 führt ein Mitkopplungswiderstand 132 zu dessen Pluseingang, und ebenso führt ein Gegenkopplungswiderstand 131 vom Ausgang P3 des Komparators 130 zum Minuseingang des Komparators 130. Ein Kondensator 135 liegt zwischen dem Minuseingang des Komparators 130 und Masse 100. Der Ausgang des Komparators 130 ist ferner über einen Widerstand 133 mit +Vcc verbunden. Der Pluseingang des Komparators 130 ist über zwei Widerstände 134 und 136 mit +Vcc bzw. Masse 100 verbunden.

Zur Erläuterung der Wirkungsweise des Dreiecksgenerators 35 sind in Fig. 19 drei Potentialpunkte P1, P2 und P3 angegeben. Beim Einschalten der Anordnung liegt P1 durch den entladenen Kondensator 135 auf Masse 100, P2 liegt über 134 an +Vcc und ist damit größer als P1. Der Komparatorausgang und damit P3 liegen deshalb auf HIGH. Dadurch wird der Kondensator 135 über die Widerstände 133 und 131 geladen, das Potential an P1 und damit das Dreieckssignal steigen an. Der Wert P2 ergibt sich aus

a) der Parallelschaltung der Widerstände 134, 133 und 132, und
b) dem unteren Spannungsteilerwiderstand 136.

Durch das Aufladen des Kondensators 135 wird schließlich P1 höher als P2, und dadurch schaltet der Ausgang P3 des Komparators 130 auf LOW, also Masse um. P3 geht also auf Null. Deshalb beginnt nun der Kondensator 135, sich über den Widerstand 131 und den Komparator 130 zu entladen, und dies ergibt den abfallenden Teil des Dreieckssignales. Der Wert P2 ergibt sich nun aus

a) der Parallelschaltung der Widerstände 132 und 136, und
b) dem Spannungsteilerwiderstand 134.

Fällt durch die Entladung des Kondensators 130 P1 unter P2, so schaltet der Komparator 130 wieder auf HIGH, an P3 liegt also wieder +Vcc. So entsteht ein Dreiecksignal mit z.B. 25 kHz.

Liegt die Spannung des Dreiecksignals am Minuseingang des Komparators 120 unter der des Referenzsignals am Pluseingang des Komparators 120, so ist der Ausgang OFF des Komparators 120 auf HIGH, und die unteren Transistoren 141 bzw. 143 können über die logischen UND-Glieder 147 bzw. 148 durch OUT1 bzw. OUT2 geschaltet werden. Liegt die Spannung des Dreieckssignals über der des Referenzsignals, so ist der Ausgang OFF des Komparators 120 auf LOW und damit kann die Statorwicklung 38 nicht bestromt werden.

Über die Spannung am Kondensator 124 und damit auch am Kondensator 127 wird also das sogenannte Tastverhältnis eingestellt, das Verhältnis der Dauer, die der Ausgang des Komparators 120 während einer Periode des Dreieckssignals auf HIGH ist zu einer ganzen Periode. Das Tastverhältnis kann zwischen 0 % und 100 % liegen. Ist die Motordrehzahl z.B. zu hoch, so wird der Kondensator 124 über RGL entladen und damit das Tastverhältnis verkleinert. Das Ganze wird als Pulsweitenmodulation (PWM) bezeichnet. Der Pull-Up-Widerstand 128 dient dazu, den Open-Collector-Ausgang OFF des Komparators 120 bei HIGH auf +Vcc zu ziehen.

Um beim Einschalten des Motors den Motor starten zu können, wird der Kondensator 124 bei der Initialisierung eine vorgegebene Zeitdauer über RGL aufgeladen, damit die Spannung am Kondensator 127 den erforderlichen Mindestwert für das Einschalten der Brücke 37 erreicht.

Die Strombegrenzung 44 wird dadurch verwirklicht, daß der Strom in der Statorwicklung 38 über einen Meßwiderstand 140 zu Masse 100 fließt. Je höher der Strom durch den Widerstand 140 ist, desto höher ist die Spannung an ihm und damit auch das Potential am Punkt 149.

Erreicht das Potential an 149 einen bestimmten Wert, so wird der Transistor 150 leitend und reduziert die Spannung am Kondensator 127, und das Tastverhältnis am Ausgang des Komparators 120 wird dadurch kleiner. Der Widerstand 126 verhindert, daß der große Kondensator 124 bei einer Strombegrenzung mit entladen wird und beschleunigt die Strombegrenzung, da der kleine Kondensator 127 schnell entladen werden kann. Nach dem Ende der aktiven Strombegrenzung wird der kleinere Kondensator 127 durch den Kondensator 124 wieder aufgeladen und so auf dessen Spannung gesetzt. Der Widerstand 126 und der Kondensator 127 bewirken also eine Priorisierung der Strombegrenzung 44.

Die Strombegrenzung 44 weist ein Filterglied aus einem Widerstand 151 und einem Kondensator 152 gegen Masse, gefolgt von dem npn-Transistor 150, der bei einer genügend hohen Spannung an seiner Basis den Pluseingang des Komparators 120 auf Masse 100 zieht, auf. Dahinter folgt ein weiteres aus den Widerständen 153 und 155 und dem Kondensator 154 bestehendes Siebglied.

Für die Beschreibung einer alternativen Form der Strombegrenzung wird auf DE 198 26 458.5 (intern: D215) verwiesen. Sie kann wie dort auch mit Hilfe eines Komparators aufgebaut werden und programmgesteuert sein.

### Regelroutine

**Fig. 20** zeigt eine mit Hilfe des $\mu$C 11 verwirklichte Regelung der Motordrehzahl.

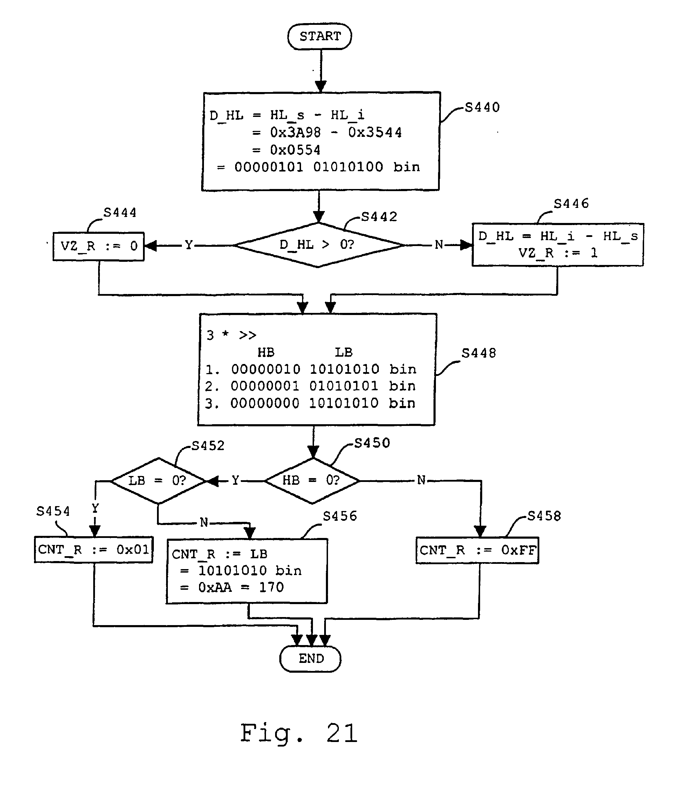

In S404 wird die Regeldifferenz aus den Hallängen HL_s und HL_i (vgl. Fig. 16) berechnet. Die Berechnung wird in Fig. 21 näher erläutert. Das Ergebnis ist eine positive Stellgröße CNT_R für die Größe (Betrag) der Regeldifferenz und ein Vorzeichen VZ_R, das angibt, ob der Motor zu schnell (VZ_R = 0) oder zu langsam (VZ_R=1)ist.

In S418 wird überprüft, ob VZ_R = 1 ist. Ist VZ_R = 1, so ist der Motor zu langsam, und der Kondensator 124 (Fig. 19) muß aufgeladen werden. Hierzu wird in S422 der Port RGL (Fig. 3, Fig. 19) durch RGL := 1 auf HIGH gesetzt. Analog wird in S420 der Port RGL durch RGL := 0 auf LOW gesetzt, falls VZ_R = 0 ist, der Motor also zu schnell ist.

Nach dem Setzen des Ports RGL wird beim Beispiel nach Fig. 20 eine zu dem Betrag CNT_R der Regeldifferenz proportionale Zeit gewartet, während der der Kondensator 124 und damit auch der Kondensator 127 (Fig. 19) aufgeladen bzw. entladen werden.

Hierzu wird in S424 eine Schleife begonnen. CNT_R wird um 1 vermindert, und es wird z.B. 10 $\mu$s lang gewartet. Daraufhin wird in S426 überprüft, ob CNT_R > 0 ist. Ist dies der Fall, so ist der als Schleifenzähler verwendete Wert CNT_R noch nicht abgearbeitet, und es wird zurück nach S424 gesprungen. Ist in S426 CNT_R = 0, so ist die Schleife insgesamt CNT_R mal durchlaufen worden, wobei mit CNT_R der in S404 berechnete ursprüngliche Wert CNT_R gemeint ist.

Nach der Beendigung der Schleife (S424 und S426) wird in S428 der Port RGL wieder auf TRISTATE gesetzt, und das Aufladen bzw. Entladen des Kondensators 124 ist beendet.

**Fig. 21** zeigt an einem Zahlenbeispiel die Berechnung der Stellgröße CNT_R und des Vorzeichens VZ_R aus der Regeldifferenz, also S404 aus Fig. 20. In S440 wird die Differenz D_HL von der der Solldrehzahl entsprechenden "Halllänge" HL_s und der gemessenen Halllänge HL_i (Fig. 16) berechnet. Als Beispiel wird eine Solldrehzahl von 1000 U/min angenommen, welche einer "Halllänge" von 15000 $\mu$s und damit einer Zweibytedarstellung 0x3A98 entspricht. Die Istdrehzahl beträgt hier 1100 U/min, was einer Halllänge von 13636 $\mu$s und einer Zweibytedarstellung 0x3544 entspricht. Die Differenz D_HL beträgt damit 0x0554 und ist in S440 auch binär dargestellt.

In S442 wird überprüft, ob die Differenz D_HL positiv ist. Ist dies der Fall, so wird in S444 VZ_R auf Null gesetzt, ansonsten wird in S446 D_HL aus der umgekehrten Differenz (HL_i - HL_s) berechnet und ist damit positiv, das Vorzeichen VZ_R wird auf 1 gesetzt.

In S448 wird D_HL drei mal nach rechts geshiftet, wobei in das höchstwertigste Bit (MSB) von HB immer eine Null nachgeschoben wird. Das Shiften geschieht, da die Stellgröße CNT_R nur 1 Byte groß sein darf und die Regeldifferenz D_HL oft zu groß ist. Ein dreimaliges Shiften nach rechts entspricht einer ganzzahligen Division durch 8 ohne Berücksichtigung des Restes. Bei dem Shiften geht die Information der untersten drei Bits des LB verloren. Das Shiften des Beispiels aus S440 wird in Binärdarstellung gezeigt.

In S450 wird überprüft, ob nach dem dreimaligen Shiften nach rechts HB = 0 ist. Ist dies nicht der Fall, so ist das geshiftete D_HL immer noch größer als 1 Byte, und CNT_R wird in S458 auf den maximalen Wert 0xFF (binär:

11111111) gesetzt. Ist in S450 HB = 0, so wird in S452 überprüft, ob auch LB= 0 ist. Ist LB ungleich Null, so wird in S456 CNT_R auf LB gesetzt. In unserem obigen Beispiel wird CNT_R auf 0xAA gesetzt, dezimal entspricht dies 170. War in S452 LB = 0, so ist es möglich, daß trotzdem vor dem Shiften in S448 eine Regeldifferenz in den unteren drei Bits von LB bestanden hat. Um nicht auf Dauer eine kleine Regeldifferenz zu behalten, wird deshalb CNT_R in S454 auf 0x01 gesetzt. Das Vorzeichen VZ_R und der Wert CNT_R am Ende der Routine der Fig. 21 werden in Fig. 20 für die Regelung verwendet.

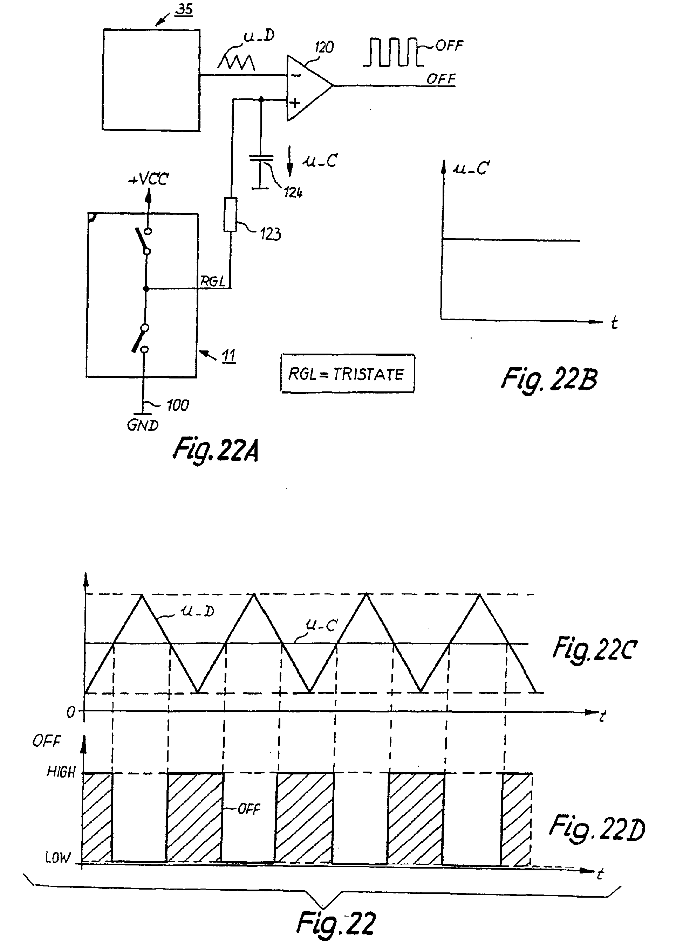

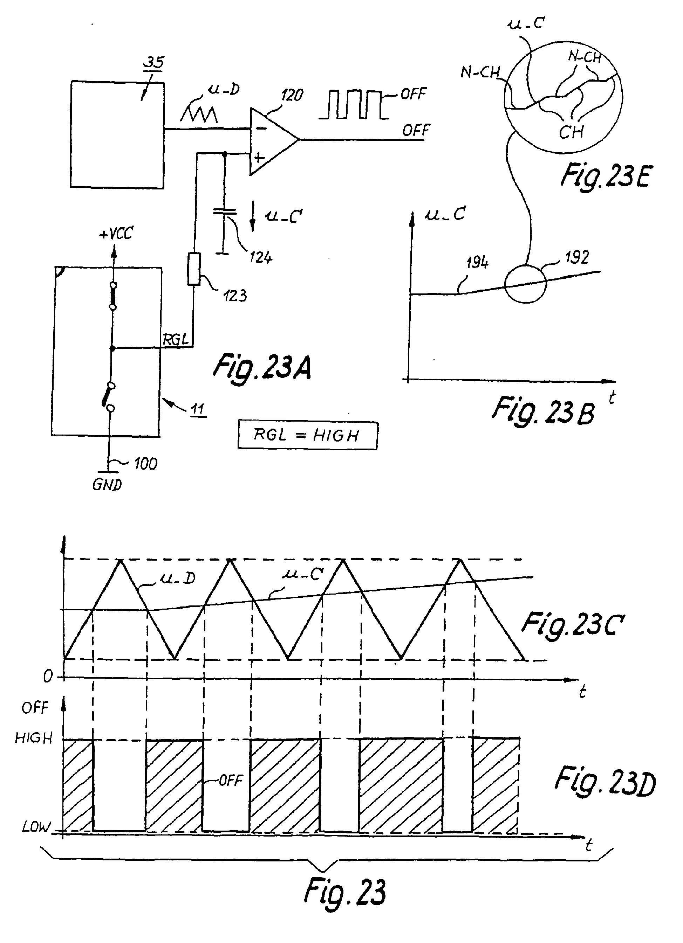

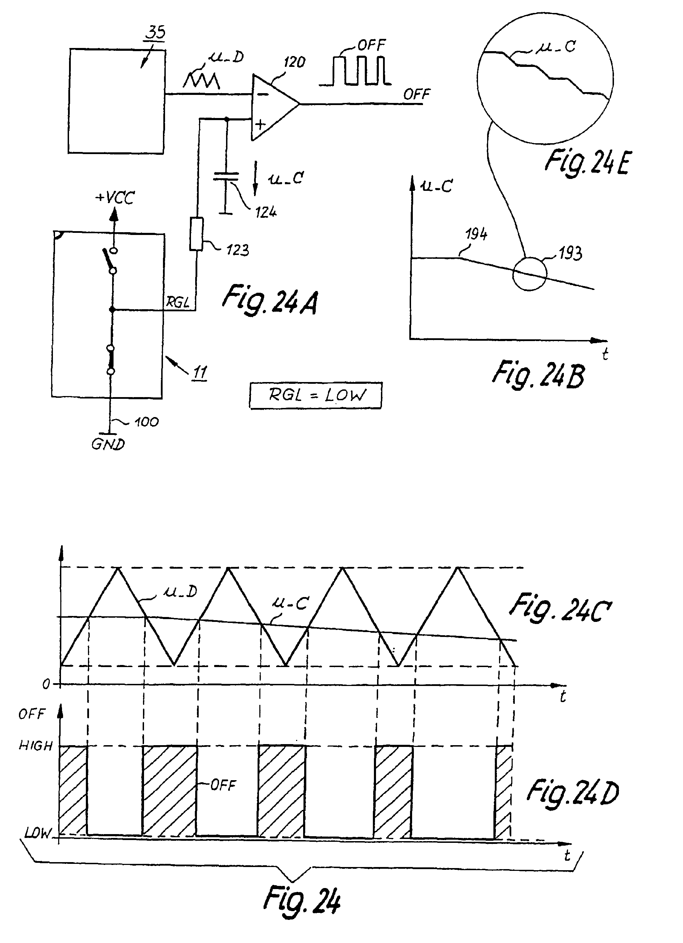

**Fig. 22** zeigt das PWM-Signal OFF für den Fall, daß RGL = TRISTATE ist, **Fig. 23** zeigt das Signal OFF beim Aufladen des Stellkondensators 124 und **Fig. 24** das Signal OFF beim Entladen des Stellkondensators 124.

Fig. 22A, 23A und 24A zeigen die Schaltung der Regelung. Der Dreiecksoszillator 35 ist an dem Minuseingang des Komparators 120 angeschlossen. Der Ausgang RGL ist mit einem Ersatzschaltbild im Inneren des µC 11 für den jeweiligen Zustand RGL = TRISTATE, RGL = HIGH und RGL = LOW dargestellt. Über den Strombegrenzungswiderstand 123 wird durch RGL der Stellkondensator 124 unverändert gelassen (Fig. 22), aufgeladen (Fig. 23) bzw. entladen (Fig. 24). Am Ausgang OFF liegt das PWM-Signal mit einem durch die Spannung U_C bestimmten Tastverhältnis vor.

Fig. 22B, 23B und 24B zeigen die zeitliche Veränderung der Spannung U_C bei dem jeweiligen Zustand des Ausgangs RGL, wobei in Fig. 23B und 24B RGL zum Zeitpunkt 194 von RGL = TRISTATE auf HIGH bzw. LOW umgeschaltet werden.

Fig. 22C, 23C und 24C zeigen jeweils in einem Spannungs-/Zeit-Diagramm die Spannung U_D des durch den Dreiecksoszillator 35 erzeugten Dreieckssignals und die Spannung U_C des Stellkondensators 124 bei dem jeweiligen Zustand des Ausgangs RGL. Es ist zu beachten, daß hier der Augenblickswert der Dreiecksspannung U_D stets größer ist als der Wert 0.

Fig. 22D, 23D und 24D zeigen das aus Fig. 22C, 23C und 24C resultierende PWM-Signal OFF. In Fig. 22D bleibt das Tastverhältnis über die Zeit gleich, in Fig. 23D wird es bei zunehmendem U_C größer, und in Fig. 24C wird es bei abnehmendem U_C kleiner.

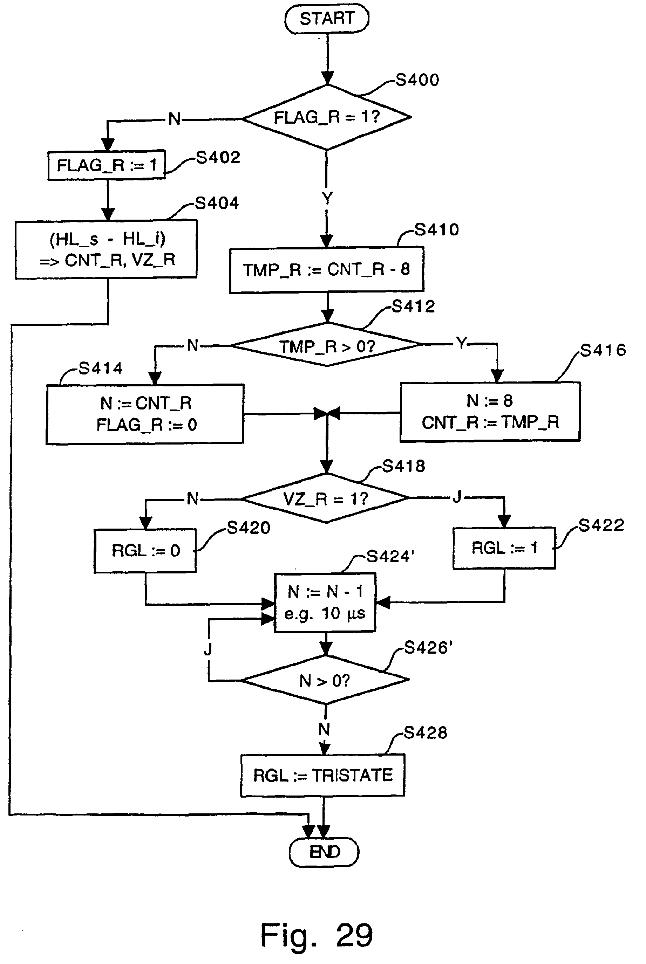

Fig. 23E zeigt einen vergrößerten Ausschnitt 192 aus Fig. 23B. Das Ansteigen der Spannung U_C des Kondensators wird immer wieder unterbrochen. Dies ist auf das in Fig. 29 beschriebene Aufteilen der Regelung in kleine zeitliche Portionen oder Häppchen zurückzuführen. In Fig. 29 wird bei jedem Aufruf der Regelung RGL auf HIGH gesetzt und der Kondensator 124 wird kurzzeitig aufgeladen. Vor dem Verlassen der Regelung wird RGL wieder auf TRISTATE gesetzt und die Spannung U_C am Kondensator 124 bleibt konstant. In Fig. 23E ist das Aufladen mit CH bezeichnet, und die konstanten Intervalle sind mit N-CH bezeichnet.

Fig. 24E zeigt analog einen vergrößerten Ausschnitt 193 aus Fig. 24B für den Fall, daß der Kondensator 124 entladen wird, ebenfalls für den Ablauf gemäß Fig. 29.

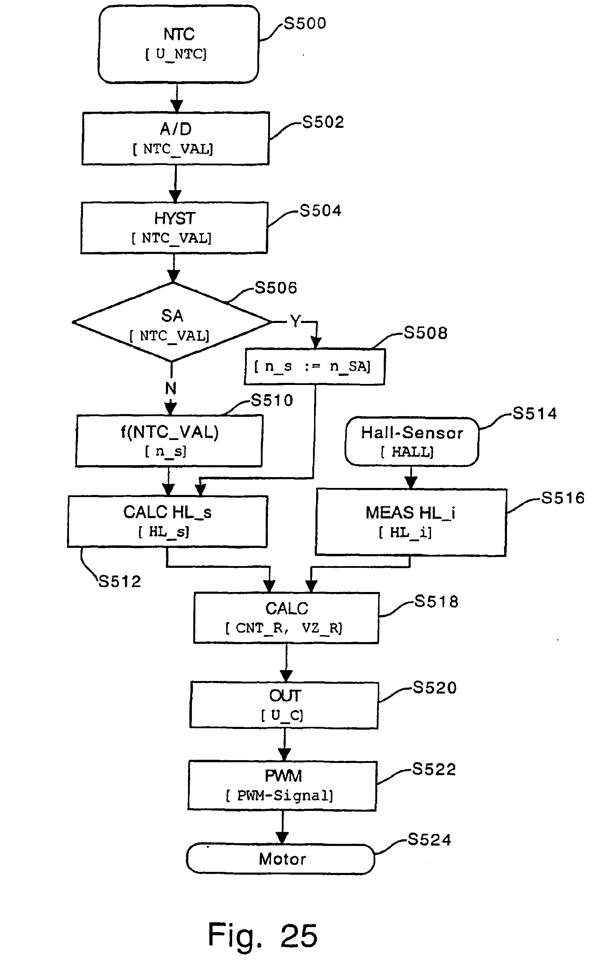

**Fig. 25** zeigt den Gesamtablauf der Regelung. Die Temperatur wird in S500 über den temperaturabhängigen NTC-Widerstand NTC detektiert (Fig. 2 und 4). Über die A/D-Wandlung A/D in S502 wird aus der Spannung U_NTC am NTC-Widerstand ein digitaler Temperaturwert NTC_VAL (Fig. 2, 4, 5, 6 und 7). In S504 wird eine Hysterese HYST der Kennlinie verwirklicht (Fig. 8 und 9). In einer Sensorabrißfunktion SA in S506 wird überprüft, ob ein Defekt des A/D-Wandlers A/D vorliegt (Fig. 10). Bei einem Sensorabriß wird die Berechnung der Solldrehzahl umgangen, in S508 eine feste Sensorabrißdrehzahl n_SA gewählt und zu der Hall-Längenberechnung "CALC HL_s" in S512 gesprungen. Mit dem NTC-Wert NTC_VAL aus der Hysteresefunktion HYST wird in S510 über eine Kennlinienfunktion "f(NTC_VAL)"eine Solldrehzahl n_s berechnet (Fig. 11, 12, 13, 14 und 15). Die Solldrehzahl wird in S512 durch eine Hall-Längenberechnung "CALC HL_s"in eine "Hall-Länge" HL_s umgerechnet. Die Ist-Drehzahl des Motors wird in S514 über einen Hall-Sensor detektiert, der ein Signal HALL liefert (Fig. 4, 16 und 17). Über die durch das Signal HALL ausgelösten Hall-Interrupts wird in S516 ("MEAS HL_i") die Hall-Länge HL_i zwischen zwei Hall-Interrupts gemessen (Fig. 16 und 17). Mittels der beiden Hall-Längen für den Soll- und den Istwert berechnet der Regler "CALC" in S518 einen Stellwert CNT_R für die Größe der Differenz von HL_s und HL_i und ein Vorzeichen VZ_R (Fig. 21). Anhand von CNT_R und VZ_R wird in OUT die Spannung U_C eines Kondensators 124 in S520 erhöht bzw. erniedrigt (Fig. 19 und 20). Über die Spannung U_C des Kondensators 124 wird in PWM S522 das Tastverhältnis des PWM-Signals eingestellt (Fig. 19). Über das Tastverhältnis des PWM-Signals wird in S524 schließlich die Geschwindigkeit des Motors geregelt.

**Funktionsmanager**

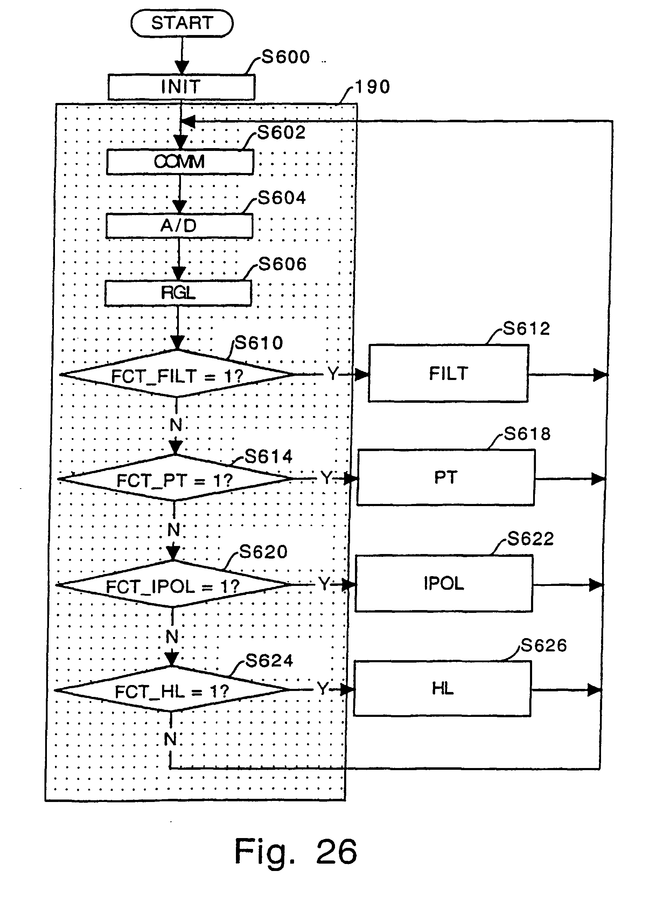

**Fig. 26** zeigt ein Flußdiagramm mit einer möglichen Ausführungsform des in dem µC 11 ablaufenden Gesamtprogramms. Nach dem Einschalten des Lüfters wird in dem µC 11 ein interner Reset ausgelöst. In S600 erfolgt die Initialiserung des µC 11. Es werden z.B. Parameter aus dem EEPROM 26 ausgelesen, der Kondensator 124 (Fig. 19) der PWM-Regelung wird auf einen Mindestwert aufgeladen und der Watchdog-Timer WDCNT 79 wird für die A/D-Wandlung gestartet.

Nach der Initialiserung erfolgt ein Sprung in einen sogenannten Funktionsmanager 190, der in S602 beginnt. Der Funktionsmanager regelt den Ablauf der einzelnen Unterprogramme.

Als erstes werden die Funktionen abgearbeitet, die zeitkritisch sind und bei jedem Durchlauf abgearbeitet werden müssen. Hierzu zählt die Kommunikationsfunktion COMM in S602, da der IIC-Bus 30 (Fig. 18) z.B. bei einer Baudrate von 2 k alle 250 μs überprüft werden muß. In S604 wird die A/D-Wandlung (S502, Fig. 25) aufgerufen und in S606 die Regelung RGL der Motordrehzahl (S518 und S520 in Fig. 25).

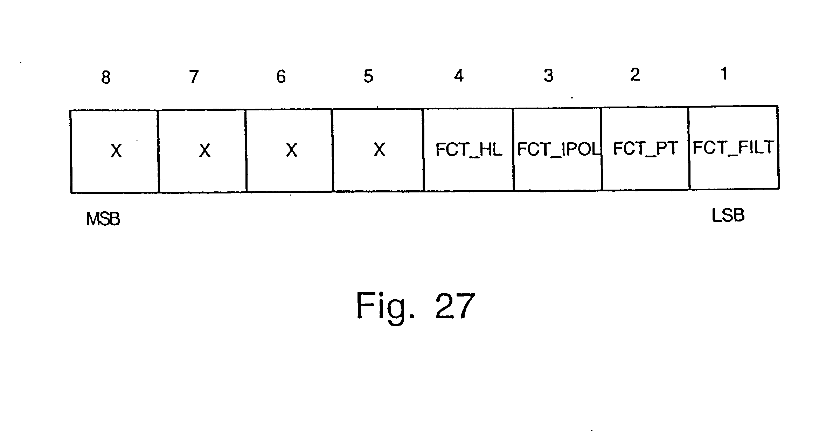

**Fig. 27** zeigt ein beispielhaftes Funktionsregister 195, in dem für jede weitere Funktion ein Bit reserviert ist.

In diesem Beispiel ist das Funktionregister 195 1 Byte groß, und es sind, von dem niederwertigsten Bit (LSB) beginnend, die folgenden Anforderungsbits für die unten erklärten anforderbaren Funktionen definiert:

- FCT_FILT für die Hysterese- und Sensorabrißfunktion,
- FCT_PT für die Kennlinienpunktbestimmungsfunktion,
- FCT_IPOL für die Drehzahlinterpolationsfunktion,
- FCT_HL für die Hall-Längenberechnungsfunktion für die Berechnung von HL_s.

Die restlichen Bits sind für weitere anforderbare Funktionen reserviert, die an den Funktionsmanager 190 angehängt werden können. Das Funktionsregister 195 belegt in diesem Ausführungsbeispiel 1 Byte, es kann aber um weitere Bytes erweitert werden.

Soll eine bestimmte anforderbare Funktion durch eine andere Funktion oder eine Interruptroutine angefordert werden, so wird das Bit der angeforderten Funktion auf 1 gesetzt. Das nächste Mal, wenn der Funktionsmanager 190 bei einem Durchlauf keine andere anforderbare Funktion mit höherer Priorität aufgerufen hat, so wird diese Funktion ausgeführt.

Ist eine angeforderte Funktion mit ihrer Abarbeitung fertig, so setzt sie ihr Bit (Fig. 27) wieder auf 0. Dies ermöglicht es, Funktionen, die nicht in einem Durchlauf abgearbeitet werden können, weil sie z.B. zu lange Zeit benötigen, aufzuteilen und in mehreren Aufrufen abzuarbeiten.

In Fig. 26 wird nach S606 in einer vorbestimmten Reihenfolge von der wichtigsten anforderbaren Funktion ausgehend jeweils geprüft, ob deren Anforderungsbit gesetzt ist. Ist dies bei einer Funktion der Fall, so wird diese ausgeführt, und daraufhin wird wieder an den Anfang S602 des Funktionsmanagers 190 gesprungen. Die Reihenfolge der Überprüfung des Funktionsregisters 195 gibt die Priorisierung der anforderbaren Funktionen vor. Je höher eine solche Funktion in dem Funktionsmanager 190 steht, desto höher ist ihre Priorität.

Die aufgerufenen Funktionen müssen dabei so kurz sein, daß ihre Abarbeitungszeit, addiert zu den immer ausgeführten Funktionen S602 bis S606, nie größer als die maximal zulässige Zeit zwischen zwei Abfragen des IIC-Buses ist. In dem obigen Beispiel mit einer Baudrate von 2 k und einer maximal zulässigen Zeit von 250 μs liegt die maximale Abarbeitungszeit für die in S610 bis S624 aufgerufenen Funktionen bei ca. 100 μs. Die in Fig. 25 aufgeführten Funktionen müssen also meistens in zeitlich kürzere Abschnitte untergliedert werden.

Die Untergliederung der Funktionen gemäß Fig. 26 stellt nur ein bevorzugtes Beispiel dar.

In S610 wird überprüft, ob das Anforderungsbit FCT_FILT für eine Filterfunktion gesetzt ist, also den Wert 1 hat. Ist es gesetzt, so wird nach FILT S612 gesprungen, und die Hysteresefunktion (S504, Fig. 25) und die Sensorabrißfunktion (S506 und S508, Fig. 25) werden in FILT ausgeführt. Diese werden als Filterfunktion bezeichnet, weil sie durch die Hysteresefunktion kleine Schwankungen des Wertes NTC_VAL in negative Richtung herausfiltern, und weil sie durch die Sensorabrißfunktion unmögliche Werte NTC_VAL herausfiltern. Weiterhin sind Mittelwertbildungen (moving average) über vorhergehende Werte von NTC_VAL möglich.

War in S610 FCT_FILT nicht gesetzt, so wird in PT S614 überprüft, ob FCT_PT gesetzt ist. Ist dies der Fall, so werden je nach Berechnungsvariante einer oder beide den gemessenen Wert NTC_VAL umgebenden Kennliniendefinitionspunkte in PT S614 bestimmt und geladen (Teil von S510, Fig. 25).

Waren in S610 und S614 weder FCT_FILT noch FCT_PT gesetzt, und ist in S620 FCT_IPOL gesetzt, so wird in IPOL S622 die Berechnung des zum Wert NTC_VAL zugehörigen Solldrehzahlwerts n_s ausgeführt (Teil von S510, Fig. 25).

Waren keine der in S610 bis S620 überprüften Bits gesetzt, und ist in S624 FCT_HL gesetzt, so wird aus der Solldrehzahl n_s in HL S626 die "Hallänge" HL_s berechnet (S512, Fig. 25). Daraufhin wird wieder nach S602 gesprungen.

War in keiner der Abfragen bis S624 ein Anforderungsbit gesetzt, so wird ohne eine Aktion nach S602 zurückgesprungen, und die Funktionen, die bei jedem Durchlauf des Funktionsmanagers 190 ausgeführt werden, werden erneut aufgerufen.

Durch den Funktionsmanager erhält man eine optimale Ausnutzung der Ressourcen des μC 11.

Im folgenden wird ein Überblick über das Zusammenarbeiten der verschiedenen Funktionen gegeben.

Die Kommunikationsfunktion in S602 wird in diesem Ausführungsbeispiel (Fig. 26) als erstes ausgeführt. Der externe IIC-Bus 30 (Fig. 18) wird abgelesen bzw. beschrieben, oder es werden Daten in das EEPROM geschrieben, bzw. aus diesem ausgelesen.

Die A/D-Wandlung in S604 wird ebenfalls bei jedem Durchlauf des Funktionsmanager aufgerufen.

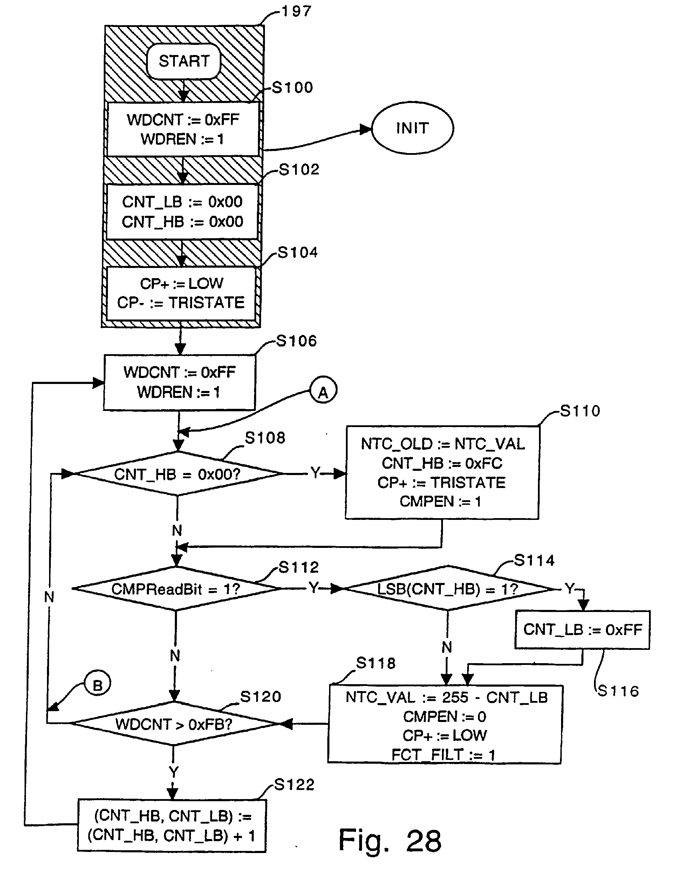

**Fig. 28** zeigt die für den Funktionsmanager gemäß Fig. 26 modifizierte A/D-Wandlung aus Fig. 5. Der Initialisierungsteil 197 in S100 - S104 wird im Initialisierungsteil INIT in S600 des Hauptprogramms ausgeführt. Der Sprung in die A/D-Wandlung erfolgt an Punkt A zwischen S106 und S108. Die A/D-Wandlung wird an Punkt B wieder verlassen, wenn also der Vergleich WDCNT > 0xFB das Ergebnis Nein (N) hat. Der Schritt S106 wird dabei nicht vergessen. Ist in S120 nicht mehr WDCNT > 0xFB, so wird wie in Fig. 5 in S122 der aus (CNT_HB 81, CNT_LB 82) gebildete Zähler CNT80 inkrementiert, und daraufhin wird in S106 der Watchdog-Timer WDCNT wieder auf 0xFF gesetzt und der Watchdog-Timer von neuem gestartet.

Nach jeder abgeschlossenen A/D-Wandlung, wenn also in S118 ein neuer Wert NTC_VAL vorliegt, wird in S118 das Anforderungsbit FCT_FILT auf 1 gesetzt, damit bei der nächsten Möglichkeit in S612 (Fig. 26) die Filterfunktion ausgeführt wird.

In S606 (Fig. 26) wird die Regelung RGL (S518 und S520, Fig. 25) aufgerufen.

**Fig. 29** zeigt eine beispielhafte Ausführung einer für den Funktionsmanager 190 angepaßten Regelung RGL. Es wird dabei von Fig. 20 ausgegangen. Gleiche oder gleich wirkende Teile wie in Fig. 20 werden deshalb mit denselben Bezugszeichen bezeichnet wie dort und gewöhnlich nicht nochmals beschrieben.

Die Berechnung von CNT_R und VZ_R in S404 benötigt so viel Zeit, daß die Regelung direkt nach der Berechnung verlassen wird. Dies wird durch das Einführen eines Flags FLAG_R erreicht. Ist in S400 nicht FLAG_R = 1, so liegt ein Neuaufruf der Regelung vor. In S402 wird mit FLAG_R := 1 das FLAG_R auf 1 gesetzt und so signalisiert, daß die Regelung aktiv ist. Daraufhin wird wie in Fig. 20 die Regelberechnung in S404 durchgeführt und aus der Regelung gesprungen.

Beim nächsten Aufruf der Regelung ist FLAG_R = 1, die Regelung ist also aktiv, und nun muß wie in den Schritten S418 bis S428 der Fig. 20 der Kondensator 124 aufgeladen bzw. entladen werden

Das Aufladen bzw. Entladen des Kondensators 124 muß in kleinere Blöcke unterteilt werden, da das Laden bzw. Entladen des Kondensators 124 (Fig. 19) der PWM-Regelung oft länger als 100 μs benötigt

Hierzu wird gemäß Fig. 29 die Regelung so verändert, daß der Kondensator 124 bei jedem Aufruf der Regelung (S606 in Fig. 26) häppchenweise auf- bzw. entladen wird, so daß kein Aufruf der Regelung länger als die durch den IIC-Bus maximal zulässige Zeit von z.B. 100 μs benötigt.

Hierzu werden vor der Entscheidung in S418 (Fig. 29) zwei weitere Variablen TMP_R und N und die Schritte S410 bis S416 eingeführt. In S410 wird der Variablen TMP_R der Wert (CNT_R - 8) zugeordnet, also der Stellgrößenwert CNT_R, vermindert um die Zahl 8. Ist TMP_R > 0, so wird in S412 nach S416 gesprungen, ansonsten nach S414. In S416, wenn also CNT_R größer als 8 ist, wird einer Zählervariablen N der Wert 8 zugeordnet, und CNT_R wird der Wert TMP_R zugeordnet, so daß die neue Stellgröße CNT_R beim nächsten Aufruf der Regelung bekannt ist. In S414, wenn also CNT_R kleiner oder gleich 8 war, wird der Zählervariablen N der Wert CNT_R zugeordnet, und FLAG_R wird auf 0 gesetzt, da CNT_R bei diesem Aufruf der Regelung vollständig abgearbeitet wird.

In den Schritten S418 bis S428 wird wie in Fig. 20 abhängig vom Vorzeichen VZ_R der Kondensator 124 während des Durchlaufens einer Schleife aufgeladen bzw. entladen. Die Schleife wird jedoch im Gegensatz zu Fig. 20 nicht CNT_R mal durchlaufen, sondern N mal, also maximal 8 mal. Hierfür wurde in S424' und S426' CNT_R durch N ersetzt.

Es wird nun der Überblick über das Zusammenarbeiten der verschiedenen Funktionen aus Fig. 26 fortgesetzt.

Durch das Setzen von FCT_FILT durch die A/D-Wandlung in S604 (Fig. 26), wenn ein neuer NTC_VAL vorliegt, wird bei der nächsten Gelegenheit von S610 (Fig. 26) aus die Hysterese- (Fig. 9) und die Sensorabrißfunktion (Fig. 10) aufgerufen werden.

Sind in S612 die Hysterese- und die Sensorabrißfunktion ausgeführt, so wird FCT_FILT wieder auf 0 gesetzt, und in S612 wird FCT_PT auf 1 gesetzt, so daß bei dem nächsten Sprung nach S614 die Kennlinienbestimmungsfunktion S618 aufgerufen wird.

Ist in S618 die Kennlinienpunktbestimmungsfunktion fertig, so setzt sie FCT_PT auf 0, und FCT_IPOL auf 1. Bei dem nächsten Sprung nach S620 wird dann schließlich S622 aufgerufen. Ist die Drehzahlinterpolationsfunktion in S622 fertig, so setzt sie FCT_IPOL auf 0 und FCT_HL auf 1.

So wird dann in S624, da FCT_HL = 1 ist, die Hall-Längenberechnung S626 aufgerufen, und bei deren Beendigung wird FCT_HL wieder auf 0 gesetzt. In S626 wird ein Sollwert HL_s für die "Hallänge" berechnet.

Der Funktionsmanager erlaubt es, gegebenenfalls weitere Unterprogramme einzufügen und dabei die durch den IIC-Bus 30 gegebene Zeitbegrenzung einfach zu erfüllen. Weiterhin wird es den Unterprogrammen und den Interruptroutinen ermöglicht, andere Unterprogramme in einfacher Weise aufzurufen.

Der Aufbau des Hauptprogramms in der Form eines Funktionsmanagers eignet sich für alle Geräte, die einen Mikrocontroller oder Mikroprozessor aufweisen, der sowohl einen Bus als auch andere Aufgaben steuert, z.B. die Steuerung eines Kfz-Motors.

Es folgt eine Tabelle mit typischen Beispielen für die Werte der verwendeten Bauteile:

| Kondensatoren: | |
| --- | --- |
| 135 | 1,5 nF |
| 127, 152 | 10 nF |
| 14, 90 | 22 nF |
| 99, 110, 166, 167 | 33 nF |
| 154 | 100 nF |
| Tantalkondensator: | |
| 124 | 3,3 μF |
| Widerstände: | |
| 140 | 3 Ω |
| 162, 163 | 47 Ω |
| 94, 153, 155 | 1 kΩ |
| 133, 136 | 2,2 kΩ |
| 106 | 3,3 kΩ |
| 164, 165 | 4,7 kΩ |
| 123, 131, 132 | 10 kΩ |
| 170 | 22 kΩ |
| 92, 114, 126 | 33 kΩ |
| 134 | 47 kΩ |
| 16, 91, 93, 96, 101, 112, 128, 169 | 100 kΩ |
| NTC-Widerstand: | |
| 18 | NTC 100 kΩ |
| npn-Transistor: | |
| 150 | BC846 |
| pnp-Transistoren: | |
| 95, 168 | BC856B |
| Komparatoren: | |
| 108, 120, 130 | LM2901D |
| Hall-Sensor: | |
| 40 | HW101A |
| EEPROM: | |
| 26 | 2-Wire Serial CMOS EEPROM AT24C01A (ATMEL) |
| Mikrocontroller: | |
| 11 | COP 842 CJ (Nat. Semicond.) |

**Patentansprüche**

1. Verfahren zum Betrieb eines elektronisch kommutierten Motors, welchem ein Mikroprozessor oder Mikrocontroller und ein diesem zugeordnetes Programm zugeordnet sind, welches Programm zur Steuerung einer Mehrzahl von Motorfunktionen unterschiedlicher Priorität dient, mit folgenden Schritten:

a) Es wird eine Mehrzahl von für den Betrieb des Motors erforderlichen, anforderbaren Routinen vorgesehen, welche nicht Interrupt-Routinene sind;
b) wenn eine anforderbare Routine benötigt wird, wird ein entsprechendes Anforderungssignal für sie gesetzt;
c) durch eine übergeordnete Programmfunktion wird geprüft, welche der angeforderten Routinen die höchste Priorität aufweist, und diese Routine höchster Priorität wird als erste ausgeführt;
d) nach Ausführung dieser Routine höchster Priorität wird das dieser Routine zugeordnete Anforderungssignal rückgesetzt (Fig. 26).

2. Verfahren nach Anspruch 1, welches nach Art einer Schleife im Betrieb des Motors ständig wiederholt wird (Fig. 26).

16

**3.** Verfahren nach Anspruch 1 oder 2, bei welchem eine im Programm auszuführende anforderbare Routine während ihrer Ausführung ein Anforderungssignal für eine andere auszuführende anforderbare Routine erzeugt.

**4.** Verfahren nach einem der vorhergehenden Ansprüche, bei welchem die übergeordnete Programmfunktion jeweils nach Abarbeitung einer angeforderten Routine eine für den Betrieb des Motors erforderliche Folge von zeitkritischen Programmschritten durchläuft, bevor sie die nächste angeforderte Routine startet (Fig. 26).

**5.** Verfahren nach Anspruch 4, bei welchem die übergeordnete Programmfunktion nach Abarbeitung einer anforderbaren Routine jeweils eine am Motor vorgesehene Verbindung zu einem Datenbus abfragt (Fig. 26).

**6.** Verfahren nach Anspruch 5, bei welchem die maximale Zeitdauer der anforderbaren Routinen durch die gewünschte Baudzahl der Datenübertragung über den Datenbus festgelegt wird (Fig. 26).

**7.** Verfahren nach einem oder mehreren der vorhergehenden Ansprüche, bei welchem die Kommutierung des Motors jeweils während eines Interrupts erfolgt, der den augenblicklichen Programmablauf unterbricht (Fig. 17).

**8.** Verfahren nach Anspruch 7, bei welchem der gerade in Ausführung befindliche Befehl vor der durch den Interrupt erfolgenden Unterbrechung des augenblicklichen Programmablaufs abgearbeitet wird.

**9.** Verfahren nach Anspruch 7 oder 8 für einen elektronisch kommutierten Motor, welcher zur Erfassung seiner Rotorstellung einen Hallgenerator aufweist, wobei ein Interrupt durch eine vorgegebene Art einer Änderung des Ausgangssignals dieses Hallgenerators ausgelöst wird.

**10.** Verfahren nach einem oder mehreren der vorhergehenden Ansprüche, bei welchem die angeforderte Funktion ihr Anforderungssignal zurücksetzt, sobald sie vollständig abgearbeitet ist (Fig. 26).

**11.** Elektronisch kommutierter Motor, welchem ein Mikroprozessor oder Mikrocontroller und ein diesem zugeordnetes Programm zugeordnet sind, welches Programm zur Steuerung einer Mehrzahl von Motorfunktionen unterschiedlicher Priorität dient und welches folgende Elemente aufweist:

    a) Es ist eine Mehrzahl von für den Betrieb des Motors erforderlichen, anforderbaren Routinen vorgesehen, welche nicht Interrupt-Routinen sind;
    b) wenn eine dieser anforderbaren Routinen benötigt wird, wird ein entsprechendes Anforderungssignal für sie gesetzt;
    c) durch eine übergeordnete Programmfunktion wird geprüft, welche dieser angeforderten Routinen die höchste Priorität aufweist, und diese Routine höchster Priorität wird als erste ausgeführt;
    d) nach Ausführung dieser Routine höchster Priorität wird das dieser Routine zugeordnete Anforderungssignal rückgesetzt (Fig. 26).

**12.** Motor nach Anspruch 11, bei welchem eine im Programm auszuführende anforderbare Routine dazu ausgebildet ist, während ihrer Ausführung ein Anforderungssignal für eine andere auszuführende anforderbare Routine zu erzeugen.

**Claims**

**1.** Method of operating an electronically commutated motor, with which a microprocessor or microcontroller and a program associated with it are associated, said program being used to control multiple motor functions of different priorities, with the following steps:

    a) multiple requestable routines which are necessary for the operation of the motor, and are not interrupt routines, are provided;
    b) if a requestable routine is required, a corresponding request signal for it is set;
    c) a higher-level program function tests which of the requested routines has the highest priority, and this routine with the highest priority is executed first;
    d) after execution of this routine with the highest priority, the request signal associated with this routine is reset (Fig. 26).

**2.** Method according to Claim 1, which is continuously repeated in the operation of the motor, like a loop (Fig. 26).

**3.** Method according to Claim 1 or 2, wherein a requestable routine to be executed in the program generates, during its execution, a request signal for another requestable routine to be executed.

**4.** Method according to one of the preceding claims, wherein the higher-level program function, each time after completing a requested routine, runs through a sequence, which is necessary for operation of the motor, of time-critical program steps, before it starts the next requested routine (Fig. 26).

**5.** Method according to Claim 4, wherein the higher-level program function, each time after completing a requestable routine, interrogates a connection, which is provided on the motor, to a data bus (Fig. 26).

**6.** Method according to Claim 5, wherein the maximum duration of the requestable routines is defined by the desired baud rate of data transmission via the data bus (Fig. 26).

**7.** Method according to one or more of the preceding claims, wherein the motor is commutated each time during an interrupt, which interrupts the current program flow (Fig. 17).

**8.** Method according to Claim 7, wherein the command which is being executed is completed before the interruption of the current program flow by the interrupt.

**9.** Method according to Claim 7 or 8 for an electronically commutated motor, which has a Hall generator to capture its rotor position, an interrupt being triggered by a predetermined kind of change to the output signal of this Hall generator.

**10.** Method according to one or more of the preceding claims, wherein the requested function resets its request signal as soon as its execution is completed (Fig. 26).

**11.** Electronically commutated motor, with which a microprocessor or microcontroller and a program associated with it are associated, said program being used to control multiple motor functions of different priorities, and having the following elements:

a) multiple requestable routines which are necessary for the operation of the motor, and are not interrupt routines, are provided;
b) if one of these requestable routines is required, a corresponding request signal for it is set;
c) a higher-level program function tests which of these requested routines has the highest priority, and this routine with the highest priority is executed first;
d) after execution of this routine with the highest priority, the request signal associated with this routine is reset (Fig. 26).

**12.** Motor according to Claim 11, wherein a requestable routine to be executed in the program is designed to generate, during its execution, a request signal for another requestable routine to be executed.

**Revendications**

**1.** Procédé de fonctionnement d'un moteur à commutation électrique auquel sont associés un microprocesseur ou microcontrôleur et un programme associé à celui-ci, lequel programme sert à commander une pluralité de fonctions de priorité différente du moteur, comprenant les étapes suivantes :

a) il est prévu une pluralité de routines appelables nécessaires pour le fonctionnement du moteur, qui ne sont pas des routines d' interruption ;
b) quand une routine appelable est nécessaire, un signal d'appel correspondant est mis à un pour elle ;
c) une fonction de programme de niveau supérieur contrôle laquelle des routines appelées présente la priorité la plus élevée et cette routine de plus haute priorité est exécutée en premier ;
d) après exécution de cette routine de plus haute priorité, le signal d'appel associé à cette routine est remis à zéro (fig. 26).

**2.** Procédé selon la revendication 1, lequel est répété en permanence à la manière d'une boucle pendant le fonctionnement du moteur (fig. 26).

3. Procédé selon la revendication 1 ou 2, dans lequel une routine appelable à exécuter dans le programme génère, pendant son exécution, un signal d'appel pour une autre routine appelable à exécuter.

4. Procédé selon une des revendications précédentes, dans lequel la fonction de programme de niveau supérieur parcourt après chaque exécution d'une routine appelée une suite d'étapes de programme à temps critique nécessaire pour le fonctionnement du moteur avant de lancer la prochaine routine appelée (fig. 26).

5. Procédé selon la revendication 4, dans lequel la fonction de programme de niveau supérieur interroge après chaque exécution d'une routine appelable une liaison avec un bus de données prévue sur le moteur (fig. 26).

6. Procédé selon la revendication 5, dans lequel la durée maximale des routines appelables est définie par le débit en bauds souhaité de la transmission de données sur le bus de données (fig. 26).

7. Procédé selon une ou plusieurs des revendications précédentes, dans lequel la commutation du moteur a lieu chaque fois pendant une interruption qui interrompt le déroulement actuel du programme (fig. 17).

8. Procédé selon la revendication 7, dans lequel l'instruction en cours d'exécution est entièrement exécutée avant l'interruption du déroulement actuel du programme provoquée par l'interruption.

9. Procédé selon la revendication 7 ou 8 pour un moteur à commutation électrique, lequel présente un générateur de Hall pour la détection de sa position de rotor, une interruption étant déclenchée par un type prédéfini de modification du signal de sortie de ce générateur de Hall.

10. Procédé selon une ou plusieurs des revendications précédentes, dans lequel la fonction appelée remet à zéro son signal d'appel dès qu'elle est entièrement exécutée (fig. 26).

11. Moteur à commutation électrique, auquel sont associés un microprocesseur ou microcontrôleur et un programme associé à celui-ci, lequel programme sert à commander une pluralité de fonctions de priorité différente du moteur et lequel présente les éléments suivante :

a) il est prévu une pluralité de routines appelables nécessaires pour le fonctionnement du moteur, qui ne sont pas des routines d'interruption ;
b) quand une de ces routines appelables est nécessaire, un signal d'appel correspondant est mis à un pour elle ;
c) une fonction de programme de niveau supérieur contrôle laquelle de ces routines appelées présente la priorité la plus élevée et cette routine de plus haute priorité est exécutée en premier ;
d) après exécution de cette routine de plus haute priorité, le signal d'appel associé à cette routine est remis à zéro (fig. 26).

12. Moteur selon la revendication 11, dans lequel une routine appelable à exécuter dans le programme est conçue pour générer, pendant son exécution, un signal d'appel pour une autre routine appelable à exécuter.

# Fig. 1

*Fig. 2*

Fig. 3

Fig. 4

EP 1 253 707 B1

Fig. 5

79 —⌐ Watchdog-Timer
e.g. 256 μs

78 —⌐ FD: e.g. 4/1
e.g. 1,024 ms

ca. 1000 Hz

80    81    83

| M S B | | | | | | L S B |
|---|---|---|---|---|---|---|

CNT_HB

| M S B | | | | | | L S B |
|---|---|---|---|---|---|---|

CNT_LB

82

CNT80

# Fig. 6

Fig.7

EP 1 253 707 B1

*Fig. 8*

Fig. 9

START

S200

NTC_VAL > T_SA

N

Y

S202

n_s := f(NTC_VAL)

S204

n_s := n_SA

END

Fig. 10

Fig. 11

| P | T | | n | | S |
|---|---|---|---|---|---|
| | °C | hex | min⁻¹ | hex | hex |
| 1 | 0 | 0 x 39 | 2000 | 0x07D0 | 0 x 0000 |
| 2 | 30 | 0 x 8D | 2000 | 0x07D0 | 0 x 001E |
| 3 | 60 | 0 x CF | 4000 | 0 x 0FA0 | 0 x 0000 |
| 4 | 100 | 0 x F1 | 4000 | 0 x 0FA0 | 0 x 0000 |

*Fig. 12*

START

S300

N := 1

S301

N := N + 1

S302

T(N) < NTC_VAL ?    Y

N

S304

T(N) = NTC_VAL ?    Y    n_s := n(N)    S305

N

S306

A := N - 1

S307

X := NTC_VAL - T(A)
n_s := n(A) + X * S(N)

S308

END

Fig. 13

Fig. 14

S304

S306'

A := N - 1
B := N

S307'

D_T := T(B) -T(A)
D_n := n(B) - n(A)
S := D_n / D_T
X := NTC_VAL - T(A)
n_s := n(A) + X * S

S308

# Fig. 15

Fig. 16

Fig. 17

Fig. 18

Fig. 19

START

S404

(HL_s - HL_i)
=> CNT_R, VZ_R

S418

N — VZ_R = 1? — Y

S420

RGL := 0

S422

RGL := 1

S424

CNT_R := CNT_R - 1
e.g. 10 µs

S426

Y — CNT_R > 0?

N

S428

RGL := TRISTATE

END

Fig. 20

```
                              ┌─────────┐
                              │  START  │
                              └─────────┘
                                   │
                                   ▼
              ┌────────────────────────────────┐
              │ D_HL = HL_s - HL_i              │── S440
              │      = 0x3A98 - 0x3544          │
              │      = 0x0554                   │
              │ = 00000101 01010100 bin         │
              └────────────────────────────────┘
                                   │
                                   ▼
   ┌──────────────┐           ╱─────────╲           ┌────────────────────┐
   │ VZ_R := 0    │◀──── Y ──┤ D_HL > 0? ├── N ────▶│ D_HL = HL_i - HL_s │
   └──────────────┘           ╲─────────╱           │ VZ_R := 1          │
     S444                        S442                └────────────────────┘
                                                          S446
                                   │
                                   ▼
              ┌────────────────────────────────┐
              │ 3 * >>                          │
              │         HB        LB            │── S448
              │ 1. 00000010 10101010 bin        │
              │ 2. 00000001 01010101 bin        │
              │ 3. 00000000 10101010 bin        │
              └────────────────────────────────┘
                                   │
                                   ▼
        ╱────────╲             ╱─────────╲
       ┤ LB = 0? ├◀──── Y ────┤ HB = 0?  ├──── N ────┐
        ╲────────╱             ╲─────────╱            │
        S452                     S450                 │
          │                        │                  │
          │ Y              N       │                  │
          ▼                        ▼                  ▼
   ┌──────────────┐    ┌──────────────────┐   ┌──────────────┐
   │ CNT_R := 0x01│    │ CNT_R := LB       │   │ CNT_R := 0xFF│
   └──────────────┘    │ = 10101010 bin    │   └──────────────┘
     S454              │ = 0xAA = 170      │     S458
                       └──────────────────┘
                         S456
                                   │
                                   ▼
                              ┌─────────┐
                              │   END   │
                              └─────────┘
```

# Fig. 21

Fig. 22A

Fig. 22B

Fig. 22C

Fig. 22D

RGL = TRISTATE

Fig. 22

Fig.23A

Fig.23B

Fig.23C

Fig.23D

Fig.23E

RGL = HIGH

Fig.23

Fig.24A

Fig.24E

Fig.24B

RGL = LOW

Fig.24C

Fig.24D

Fig.24

Fig. 25

Fig. 26

EP 1 253 707 B1

| 8 | 7 | 6 | 5 | 4 | 3 | 2 | 1 |
|---|---|---|---|---|---|---|---|
| X | X | X | X | FCT_HL | FCT_IPOL | FCT_PT | FCT_FILT |

MSB

LSB

## Fig. 27

Fig. 28

Fig. 29

## IN DER BESCHREIBUNG AUFGEFÜHRTE DOKUMENTE

**In der Beschreibung aufgeführte Patentdokumente**

- US 4743815 A
- WO 9715111 A
- DE 4441372
- DE 19700479
- DE 19826458